(19) Europäisches Patentamt
European Patent Office
Office européen des brevets

(11) **EP 2 700 452 B1**

(12) **EUROPEAN PATENT SPECIFICATION**

(45) Date of publication and mention
of the grant of the patent:
**23.10.2019  Bulletin 2019/43**

(51) Int Cl.:
***B03C 3/08*** *(2006.01)*        ***B03C 3/09*** *(2006.01)*
***B03C 3/38*** *(2006.01)*        ***B03C 3/41*** *(2006.01)*
***B03C 3/86*** *(2006.01)*

(21) Application number: **13179792.0**

(22) Date of filing: **08.08.2013**

(54) **Discharge device and air conditioner**

Entladungsvorrichtung und Klimaanlage

Dispositif de décharge et conditionneur d'air

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2012   JP 2012183292**

(43) Date of publication of application:
**26.02.2014   Bulletin 2014/09**

(73) Proprietor: **Mitsubishi Electric Corporation
Chiyoda-ku
Tokyo 100-8310 (JP)**

(72) Inventors:
• **Morioka, Reiji
Tokyo, 100-8310 (JP)**
• **Furuhashi, Takuya
Tokyo, 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 2 701 252          WO-A1-2013/054428
JP-A- 2008 284 412        JP-A- 2010 058 061
US-A1- 2007 028 775

## Description

CROSS-REFERENCE TO RELATED APPLICATIONS

This application is based on and claims the benefit of priority from Japanese Patent Application No. 2012-183292, filed in Japan on August 22, 2012.

[Technical Field]

The present invention relates to a discharge device that efficiently removes and inactivates bacteria, fungus, viruses, and the like suspended in a room.

[Background Art]

In some conventional discharge devices that cause electric discharge and form an electric field, an air channel is formed inside a housing and a plurality of conductive plates are provided at spaces from each other across the channel obliquely, so that the pressure loss decreases (for example, see Patent Literature 1).

In some discharge devices, a plurality of V-shaped bent counter electrodes are employed in the device using a positioning members or the like, so that the air cleaning performance improves (for example, see Patent Literature 2).

WO 2013/054428 A1 is directed to an apparatus for generating electric field and electric discharge. An electric field and discharge generator includes a discharge electrode, a counter electrode, an upper frame, a lower frame, an upper rib, and a lower rib. The counter electrode has an electrode portion having a plate-like shape. The electrode portion faces the discharge electrode. The discharge electrode and the counter electrode are disposed between the upper frame and the lower frame. The upper rib is provided in the upper frame. The upper rib faces one side surface of the electrode portion from the upper frame side. The lower rib is provided in the lower frame. The lower rib faces the other side surface of the electrode portion from the lower frame side. The upper rib and the lower rib maintain the position of the electrode portion.

EP 2 701 252 A1 is directed to an electric discharge apparatus. A discharge device is provided that can prevent cutting of a discharge member, and allows both a reduction in thickness and an improvement in assemblability. Thus, the discharge device includes a discharge electrode and a counter electrode facing each other, and the discharge electrode includes a discharge member facing the counter electrode, a loop-like terminal mounted to an end of the discharge member in a longitudinal direction, and a tube having an electrically insulating property and covering a mounting portion between an end of the discharge member and the terminal.

JP 2008-284412 is directed to an electric precipitation and sterilization unit and an air conditioner equipped with it. The problem is to be solved is to provide an electric precipitation and sterilization unit which enables an electric precipitation function and an ozone generating function to be independently used under an optimal condition and which has a low cost. The solution to this problem is: An electric precipitation unit part, a sterilization unit part, and a power source part are installed in a case. The electric precipitation unit part and the sterilization unit part respectively have a high-voltage receiving plate which can receive a plus and minus high voltage. A high-voltage source which can output a plus and minus high voltage is fitted to the power source part. A plus high voltage is applied to the high-voltage receiving plate of the electric precipitation unit part, and a minus high voltage is applied to the high-voltage receiving plate of the sterilization unit part. The electric precipitation unit part and the sterilization unit part can be detached from the power source part, and both of them can be separated.

US 2007/0028775 A1 is directed to a device for ionizing particles carried in an airflow, for ventilation, heating, and/or air-conditioning system in particular. The object of this invention is a device for ionizing particles carried in an airflow circulating inside a system, this device including at least two electrodes held by a chassis and connected, respectively, to the corresponding terminals of polarized electrical power supply. Two adjacent first electrodes are arranged on either side of a second electrode, which is formed from at least one conductor cable. The latter is hooked onto fingers that are designed as an elastic part for tensioning the conductor cable and that are held by the chassis.

[Citation List]

[Patent Literature]

[Patent Literature 1] Japanese Examined Utility Model Registration No. 2-48047

[Patent Literature 2] Japanese Unexamined Patent Application Publication

[Summary of Invention]

[Technical Problem]

In some conventional discharge devices that cause electric discharge and form an electric field, counter electrodes are set oblique to the air channel so that the pressure loss decreases. In such devices, since the counter electrodes are formed separately, problems arise, for example, the assembly takes time, the number of components increases, and the plurality of counter electrodes cannot be fixed to a fixing member easily.

If a counter electrode portion is formed as a single component by cutting out from a flat plate, the pressure loss increases because of the belt portions of the counter electrode portion. When the counter electrode portion is formed of a resin, it can be formed to have an arbitrary shape. However, a conductive resin incorporated with carbon or the like to substitute a metal is expensive and cannot conduct electricity stably.

It is an object of the present invention to decrease the pressure loss. It is another object of the present invention to provide a compact device.

[Solution to Problem]

A discharge device according to the present invention is defined by the independent claim 1.

[Advantageous Effects of Invention]

According to the present invention, the pressure loss can be decreased by appropriately selecting the shape of the counter electrode. Hence, the passing air volume increases, and the performance of the discharge device per hour improves. Also since the creeping distance between the discharge electrode and the first and second connecting portions of the counter electrode can be increased, the discharge device can be made compact.

[Brief Description of Drawings]

The present invention will become fully understood from the detailed description given hereinafter in conjunction with the accompanying drawings, in which:

Fig. 1 is a perspective view of an air conditioner 3000 of Embodiment 1;
Fig. 2 shows a state wherein a discharge device 1000 of Embodiment 1 is mounted in the air conditioner 3000;
Fig. 3 shows a section taken along a line F - F of Fig. 2 of the air conditioner 3000 of Embodiment 1;
Fig. 4 is an exploded view of the discharge device 1000 of Embodiment 1;
Fig. 5 is an exploded view of a support portion assembly 2000 of Embodiment 1;
Fig. 6 is a top view of the discharge device 1000 of Embodiment 1 from which a prefilter 100 and an upper frame 200 are removed;
Fig. 7 shows a section taken along a line A - A of Fig. 4;
Fig. 8 is a perspective view of a counter electrode 700 of Embodiment 1;
Fig. 9 shows sections respectively taken along lines B - B and C - C of Fig. 8;
Fig. 10 is a perspective view of a conventional counter electrode;
Fig. 11 shows a section taken along a line D - D of Fig. 10, and a section of a connecting portion shown in Fig. 10;
Fig. 12 shows the positional relationship between the counter electrode 700 and the discharge electrode 300 of Embodiment 1 (sections each taken along the line C - C of Fig. 8);
Fig. 13 includes perspective views respectively showing a right intermediate frame 500 and a left intermediate frame 600 of the Embodiment 1;
Fig. 14 shows the left intermediate frame 600 and a lower frame 800 of Embodiment 1 which are assembled together;
Fig. 15 shows a spring attaching portion of Embodiment 1 in detail;
Fig. 16 shows drain holes 842a and 842b in the lower frame 800 of Embodiment 1;
Fig. 17 is a perspective view of the lower frame 800 of Embodiment 1;
Fig. 18 shows an extending portion 507 of Embodiment 1;
Fig. 19 also shows the extending portion 507 of Embodiment 1;
Fig. 20 includes views showing the creeping distance between a low-voltage-side connecting portion 710 and a high-voltage-side supply terminal 709 of Embodiment 1;
Fig. 21 shows a discharge electrode 300 of Embodiment 1;
Fig. 22 is a perspective view showing another example of the counter electrode 700 of Embodiment 1;
Fig. 23 shows the relationship among a connecting portion 733 of the counter electrode 700, an upper rib 201, and a lower rib 844 of Embodiment 1;
Fig. 24 is a perspective view showing the discharge device 1000 (from which the upper frame 200 is removed) of Embodiment 1;
Fig. 25 is a perspective view showing counter electrode contact ribs 202 formed on the lower side of the upper frame 200 of Embodiment 1; and
Fig. 26 is a sectional view for explaining the function of the counter electrode contact ribs 202 of Embodiment 1.

[Description of Embodiments]

In describing preferred embodiments illustrated in the drawings, specific terminology is employed for the sake of clarity. However, the disclosure of the present invention is not intended to be limited to the specific terminology so selected, and it is to be understood that each specific element includes all technical equivalents that operate in a similar manner and achieve a similar result.

Embodiment 1.

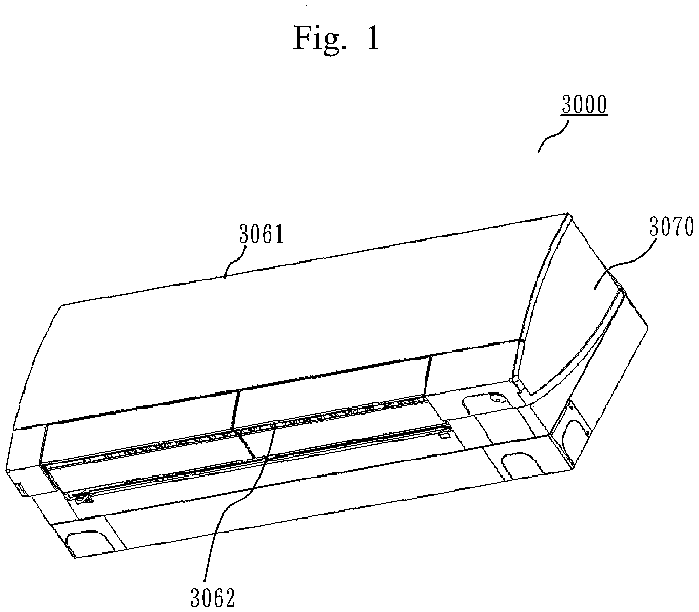

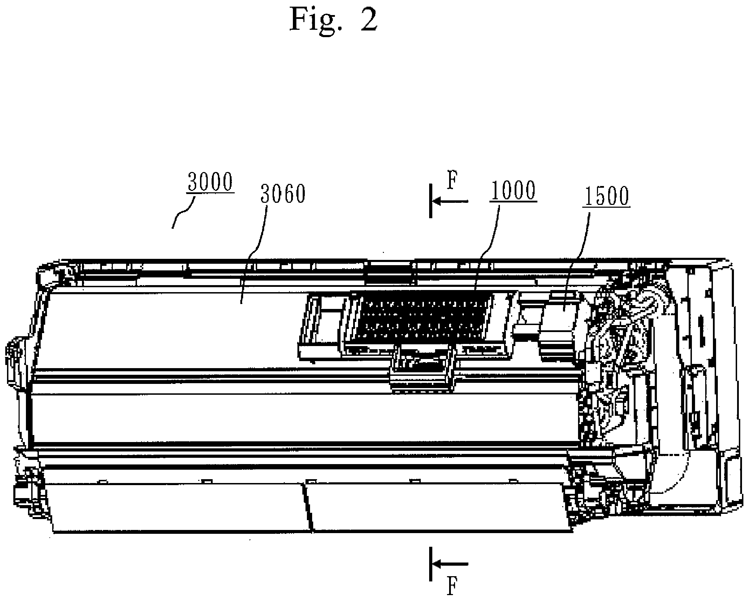

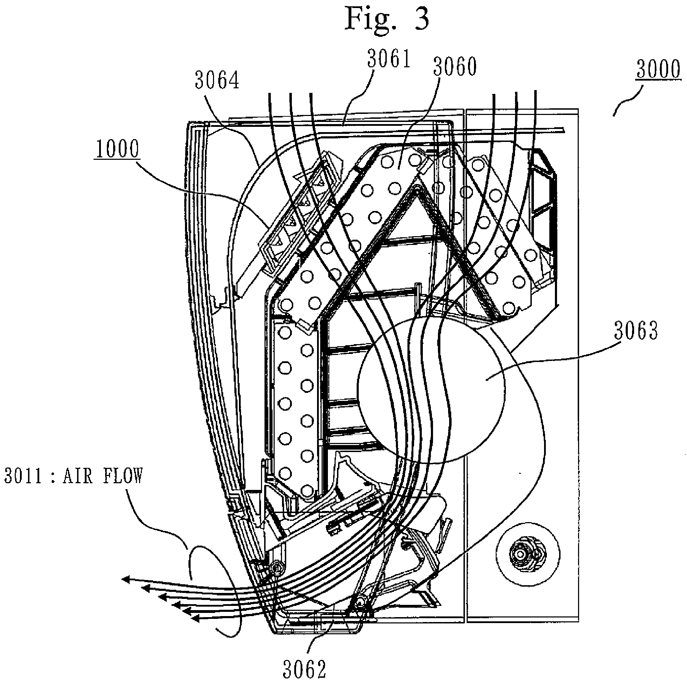

A discharge device 1000 of Embodiment 1 will be described with reference to Figs. 1 to 26. The discharge device 1000 is employed in, for example, an air conditioner, and inactivates airborne germs and viruses contained in the air. Fig. 1 is a perspective view of an air conditioner 3000 in which the discharge device 1000 is to be mounted. Fig. 2 is a view showing a state wherein the discharge device 1000 of Embodiment 1 is mounted in the air conditioner 3000. Note that in Fig. 2, a panel 3070 of the air conditioner 3000 of Fig. 1 is removed. Fig. 3 shows a section taken along a line F - F of Fig. 2.

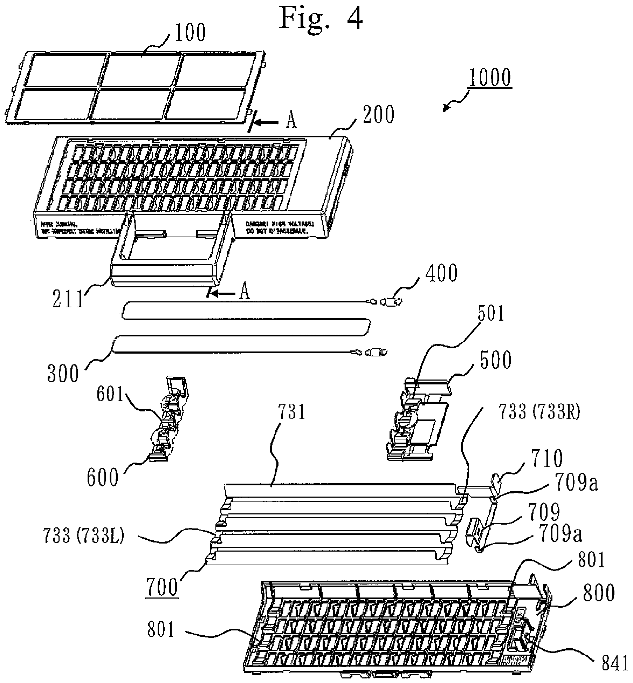

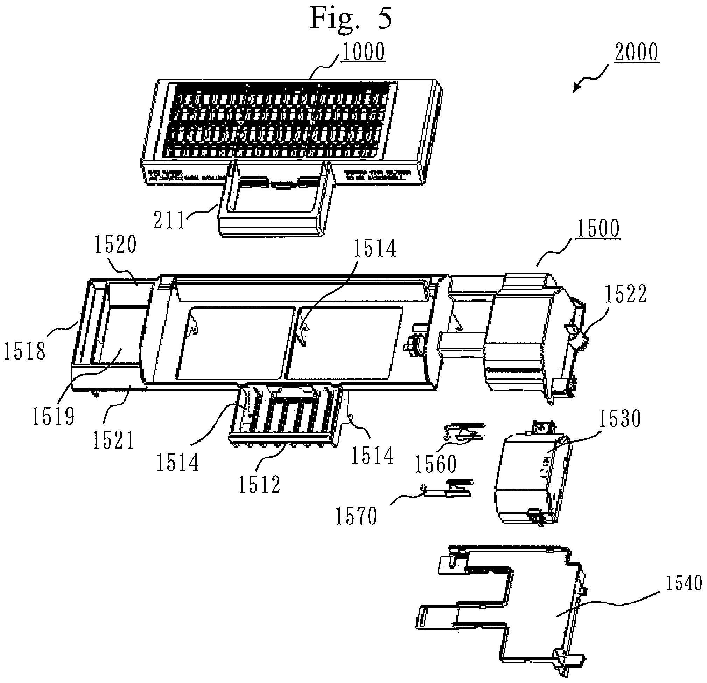

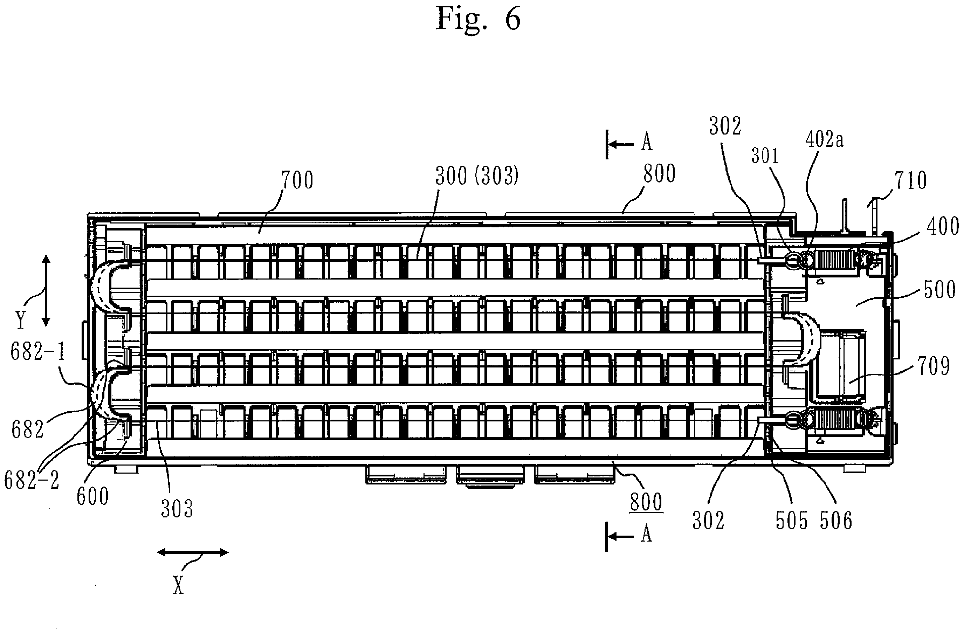

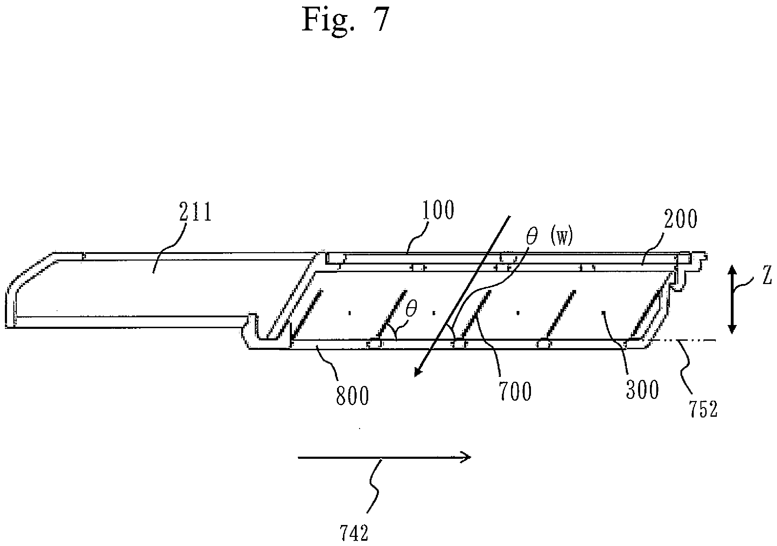

Fig. 4 is an exploded perspective view of the discharge device 1000 of Embodiment 1 which causes electric discharge and forms an electric field. Fig. 5 is an exploded view of a support portion assembly 2000. The support portion assembly 2000 is constituted by the discharge device 1000, a support portion 1500, a high-voltage substrate 1530, a support-side high-voltage terminal 1570, a support-side low-voltage terminal 1560, and a high-voltage substrate cover 1540. The high-voltage substrate 1530, support-side high-voltage terminal 1570, and support-side low-voltage terminal 1560 are related to the support portion 1500. The high-voltage substrate 1530, support-side high-voltage terminal 1570, and support-side low-voltage terminal 1560 are attached to the support portion 1500 using the high-voltage substrate cover 1540. Fig. 6 is a top view of the discharge device 1000 from which a prefilter 100 and an upper frame 200 are removed. Fig. 7 shows a section taken along a line A - A of Fig. 4 (or Fig. 6). As shown in Figs. 6 and 7, the long-side side of the discharge device 1000 corresponds to the transversal direction (X-direction in Fig. 6), the short-side side of the discharge device 1000 corresponds to the longitudinal direction (Y-direction in Fig. 6), and the direction in which the upper frame 200 and the lower frame 800 overlap corresponds to the height direction (Z-direction in Fig. 7).

(Structure of Discharge Device 1000)

In Fig. 4, the discharge device 1000 is constituted by the prefilter 100, the upper frame 200, a metal discharge electrode 300, metal springs 400, a right intermediate frame (upper holding frame) 500, a left intermediate frame (upper holding frame) 600, a metal counter electrode 700, a metal high-voltage-side supply terminal 709, a low-voltage-side connecting portion 710, and the lower frame 800 sequentially in the direction of air flow (from top to bottom in Fig. 4). The prefilter 100 is formed by insert-molding a net into a resin frame. The upper frame 200 is made of an insulating resin. A high voltage is applied to the discharge electrode 300. The springs 400 serve to pull the discharge electrode 300. The right intermediate frame 500 and the left intermediate frame 600 are located between the upper frame 200 and the lower frame 800. The counter electrode 700 serves as a GND electrode (0 V). The high-voltage-side supply terminal 709 supplies a high voltage of 3 to 7 kV to the discharge electrode 300, and is connected to the high-voltage substrate 1530. The low-voltage-side connecting portion 710 is connected to a GND wire (not shown). The lower frame 800 is made of an insulating resin.

(Function of Discharge Device 1000)

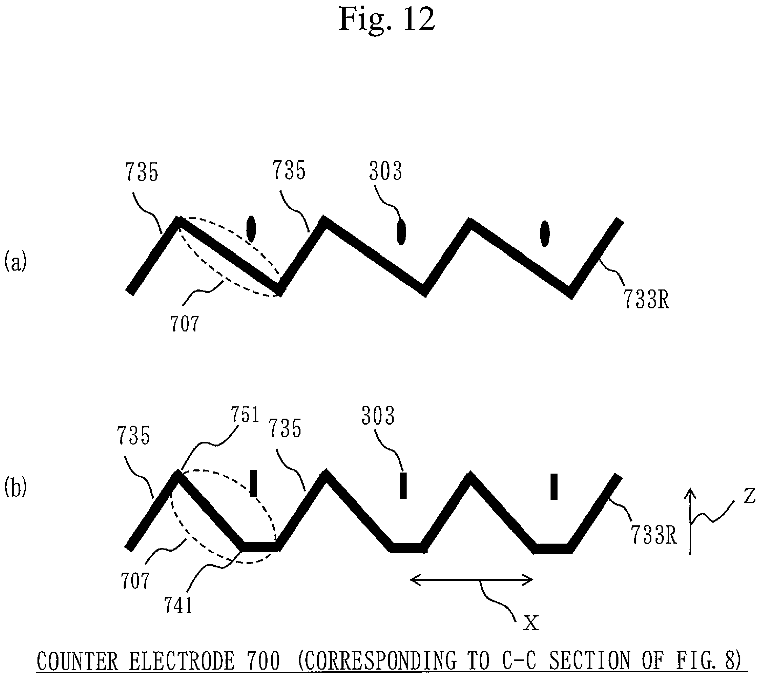

As shown in Fig. 4, the discharge device 1000 is a charging device essentially constituted by the discharge electrode 300 and the counter electrode 700, and is not provided with a dust collecting portion. As shown in Fig. 7, an air flow flows into the upper frame 200 from above and flows out of the lower frame 800 downward through a discharge space and an electric field space (a portion around a wire 303 in (b) of Fig. 12) which are formed by the discharge electrode 300 and the counter electrode 700. The airborne viruses and airborne germs are inactivated as they are exposed to the electric discharge while passing through these spaces. Being exposed to the electric discharge means that components in the air are excited by the high voltage and are bombarded against each other while they are imparted with energy. Also, when subjected to a high-voltage electric field, polarization charges are generated in the cell membranes of the germs to form pores in the cell membranes, followed by formation of unrecoverable holes. This renders the germs to be inactivated easily. The viruses are also easily inactivated if they are under the influence of the electric field, because they are affected by the electric discharge strongly. Therefore, even when a charging device is constituted by only the discharge electrode 300 and counter electrode 700 and not provided with a dust collecting portion, it strongly affects the viruses and germs passing through the charging device, even though the dust collecting performance may be inferior to that of a two-stage dust collector constituted by a charging portion and a dust collecting portion. Hence, the discharge device 1000 efficiently inactivates the viruses and germs passing through it.

(Pressure Loss of Discharge Device 1000)

Since the discharge device 1000 includes only a charging device, as described above, it has a small thickness in the direction of depth (a height Z in Fig. 7 is small) and can be formed to produce a very small pressure loss, unlike a two-stage air cleaning device constituted by a charging device and a dust collector. The discharge device 1000 has a pressure loss of approximately 1 Pa when the passing air speed is 1 m/s. This pressure loss is about 1/10 that of a medium-performance filter and is about 1/30 that of an HEPA filter. Hence, the discharge device 1000 is a low-pressure-loss body.

(Effect of Discharge Device 1000: Space Saving and Pressure Loss Improvement)

The air conditioner 3000 shown in Fig. 3 is provided with a suction port 3061, a blowout port 3062, a heat exchanger 3060, and a blower fan 3063. The air conditioner 3000 has a cross-flow fan as the blower fan 3063. Like the air conditioner 3000, an air conditioner having a blower fan 3063, particularly a cross-flow fan, is inferior in terms of pressure loss. Hence, if the discharge device 1000 is set upstream of the heat exchanger 3060 and downstream of an air conditioner prefilter which is a coarse filter set on the suction port 3061 side, it is preferable in improving the pressure loss. Arrows 3011 in Fig. 3 indicate the air flow. By setting the discharge device 1000 between the suction port 3061 and the heat exchanger 3060, the airborne viruses and airborne germs are inactivated without largely interfering with the aerodynamic performance of the air conditioner 3000, so that clean air can be blown from the blowout port 3062.

(Effect of Discharge Device 1000: Heat Exchanger 3060 Positioned Upstream)

As in the discharge device 1000, if only the charging device is included, the dust can be electrified and adsorbed by the heat exchanger 3060 provided in the slip stream. As the discharge device 1000 is set upstream of the heat exchanger 3060, the discharge device 1000 will not be affected by the relatively humid air having passed through the heat exchanger 3060. Thus, abnormal electric discharge due to water will not occur, which ensures safety. As the discharge device 1000 is set downstream of the prefilter 3064, large-particle dust will not cause clogging easily between the high-voltage electrode and low-voltage electrode.

(Support Portion 1500)

When setting the discharge device 1000 in the air conditioner 3000, the discharge device 1000 is set on the support portion 1500 provided upstream of the heat exchanger 3060, as shown in Figs. 2 and 5. The support portion 1500 accommodates the high-voltage substrate 1530, the support-side high-voltage terminal 1570 to be connected to the high-voltage substrate 1530, and the support-side low-voltage terminal 1560 to be connected to the high-voltage substrate 1530. The discharge device 1000 is set on the support portion 1500 through the support-side high-voltage terminal 1570 and the support-side low-voltage terminal 1560. A plurality of catch portions 1514 are provided on the rear surface of the support portion 1500. The support portion 1500 is fixed to the heat exchanger 3060 by applying or hooking the catch portions 1514 to a pipe provided to a refrigerant pipe (not shown).

(Attaching Relationship between Support Portion 1500 and Panel 3070)

As shown in Fig. 5, the support portion 1500 has a screwed portion 1522 on its right end portion, and is fixed with a screw to a screw fixing portion formed on the right end of the heat exchanger 3060. The support portion 1500 has, on its left end portion, a panel contact portion 1518 located at almost the center of the air conditioner 3000 (Fig. 2). A recess 3071 (not shown) that matches the shape of the panel contact portion 1518 is formed in a rear-side surface, which opposes the heat exchanger 3060, of a panel 3070 (Fig. 1) that covers the heat exchanger 3060. The recess 3071 is brought into contact with the panel contact portion 1518, and the left end of the support portion 1500 is fixed by the recess 3071 formed in the panel 3070 so as not to move in the height direction. Hence, the right end of the support portion 1500 is fixed to the right end of the heat exchanger 3060 by screwing, and the left end of the support portion 1500 is fixed by the recess 3071. Therefore, when removing the discharge device 1000 from the support portion 1500, the support portion 1500 will not disengage from the heat exchanger 3060. Since the support portion 1500 is fixed at its two ends, the discharge device 1000 can be easily removed out from the support portion 1500 by pulling. A quadrangular opening portion 1519 is formed in the support portion 1500 between the portion to set the discharge device 1000 and the panel contact portion 1518. This decreases the pressure loss. An upper rib 1520 and a lower rib 1521 which define the opening portion 1519 are inclined with respect to the lower frame 800, and to be almost parallel to the direction of air flow from the suction port. The upper rib 1520 and the lower rib 1521 are inclined to be almost parallel to the vertical direction as well. This formation can also decrease the pressure loss of the upper and lower ribs.

(Handle Portion 211 of Upper Frame 200)

As shown in Fig. 4, a handle portion 211 is attached to the upper frame 200. The handle portion 211 allows the user to hold the discharge device 1000 with his or her hands when removing it from the support portion 1500. The handle portion 211 is formed at the lower end portion of the upper frame 200 to have a U-letter shape. The handle portion 211 provided to the discharge device 1000 has no grid, so that the user can grip the handle portion 211 easily and can insert his or her hand deep into the air conditioner 3000 even if the user's hand is large. On the contrary, in the air conditioner 3000 loaded with the discharge device 1000, if the handle portion 211 has no grid, the user may accidentally touch the heat exchanger 3060 behind the discharge device 1000 and get hurt. In view of this, a grid portion 1512 having a plurality of vertical bars is provided to the support portion 1500 where the discharge device 1000 is to be set. This prevents the user's hand from getting hurt by the heat exchanger 3060. The grid portion is lower (nearer to the heat exchanger side) than in a case where the handle portion 211 has a grid. The user can thus insert his or hand deep into the air conditioner 3000 so that the discharge device 1000 can be attached/detached easily. Since the grid of the grid portion 1512 is positioned to be slightly lower than the height of the lower end portion of the support portion 1500 (to be near to the heat exchanger), the user can insert his or her hand much deeper, so that the discharge device 1000 can be attached/detached further easily.

(Catch Portions 1514)

The support portion 1500 is provided with the catch portions 1514 (Fig. 5 shows two catch portions 1514) on the rear side of the grid portion 1512, to be integral with the grid portion 1512. By applying or hooking the catch portions 1514 to the pipe provided to the refrigerant pipe, the catch portions 1514 can serve as index marks for assembly, facilitating the assembly. Particularly, since the catch portions 1514 are formed on the rear side of the grid portion 1512 located under the support portion 1500, the user can visually check the support portion 1500 easily. Thus, the user can place the support portion 1500 easily toward the upper side of the heat exchanger 3060 from the front side of a bend portion located at the lower end of the heat exchanger 3060 on the upper portion of the front surface of the air conditioner 3000. When pulling out the discharge device 1000 from the support portion 1500, the lower portion of the support portion 1500 will not become loose, because it is fixed by the catch portions 1514, so that the discharge device 1000 can be attached/detached easily. If the catch portions 1514 are applied or hooked to the pipe located at the lowest position of the heat exchanger 3060 on the upper portion of the front surface of the air conditioner 3000, assembly is facilitated.

(Prefilter 100, Lower Frame 800)

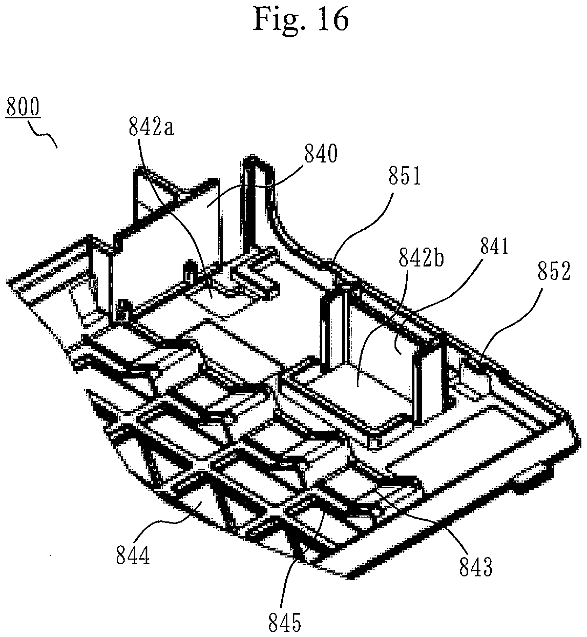

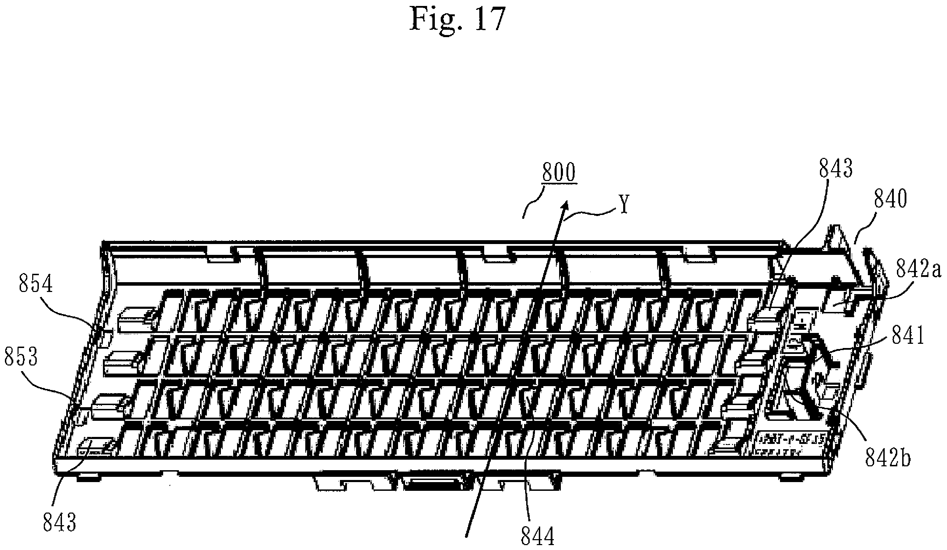

The prefilter 100 (Fig. 4), with a coarse net having approximately 30 warp threads and 30 weft threads per square inch, is formed by insert-molding the net into a resin frame, and prevents large dirt particles from flowing into the discharge device 1000. The upper frame 200 forms a grid with a plurality of openings as small as not allowing a finger to enter. While allowing air communication, this prevents the user from touching the discharge electrode 300 or the counter electrode 700 from above. The lower frame 800 also forms a grid with a plurality of openings as small as not allowing a finger to enter, and allows air communication. The lower frame 800 has lower ribs 844 (Fig. 17). As shown in Fig. 4, the counter electrode 700 is set on the lower frame 800, and the lower frame 800 holds the counter electrode 700. The lower frame 800 has the ribs (Fig. 17) of a low-voltage terminal holding portion 840 (Fig. 16) and a high-voltage terminal holding portion 841 (Fig. 16), respectively. These ribs hold the low-voltage-side connecting portion 710 and the high-voltage-side supply terminal 709.

(Right Intermediate Frame 500, Left Intermediate Frame 600)

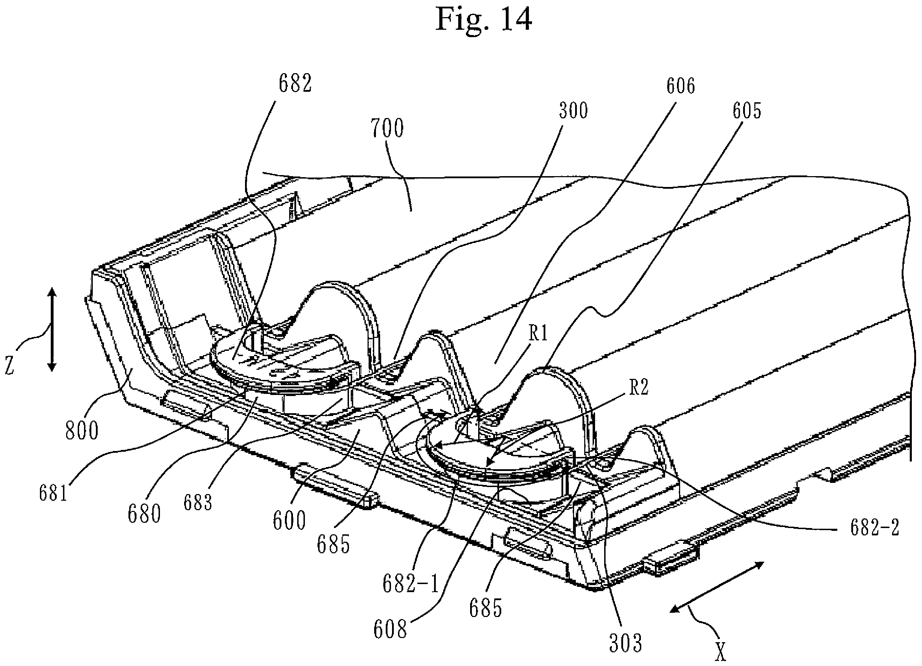

As shown in Fig. 4, the right intermediate frame 500 and the left intermediate frame 600 are provided between the upper frame 200 and the lower frame 800. The right intermediate frame 500 and the left intermediate frame 600 fix connecting portions 733 (Fig. 4; to be described later) of the counter electrode 700 set on the lower frame 800, by retaining from above. In the following description, when referring to both the intermediate frames 500 and 600, they will be collectively called merely the "intermediate frame". When the two intermediate frames need be distinguished, they will be referred separately to as the right intermediate frame 500 and the left intermediate frame 600. The intermediate frame has fold-back portions 680 (Fig. 14; to be described later) where the wire-like discharge electrode 300 is to be folded back. Each fold-back portion 680 catches the wire-like discharge electrode 300 and switches it by 180°.

Fig. 6 is a top view of the discharge device 1000. Fig. 7 shows a section taken along a line A-A of Fig. 6. The counter electrode 700 is disposed parallel to the discharge electrode 300 to oppose it at a predetermined distance. The high-voltage-side supply terminal 709 is fixed to the rib (the high-voltage terminal holding portion 841 in Figs. 16 and 17) provided to the lower frame 800. The high-voltage-side supply terminal 709 has one contact portion with respect to the high-voltage power supply, and two spring fixing portions. The high-voltage-side supply terminal 709 is formed of a thick stainless plate or the like of approximately 0.5 t, and with its V-shape-notched catch portions 709a (Fig. 4) catches the end portions of the springs 400 (Fig. 6). The high-voltage-side supply terminal 709 (Fig. 4) is urged against the lower frame 800 by the lower surface of the intermediate frame and fixed there. The catch portion 709a exposes in the height direction of the discharge device 1000 through the notched portion of the intermediate frame.

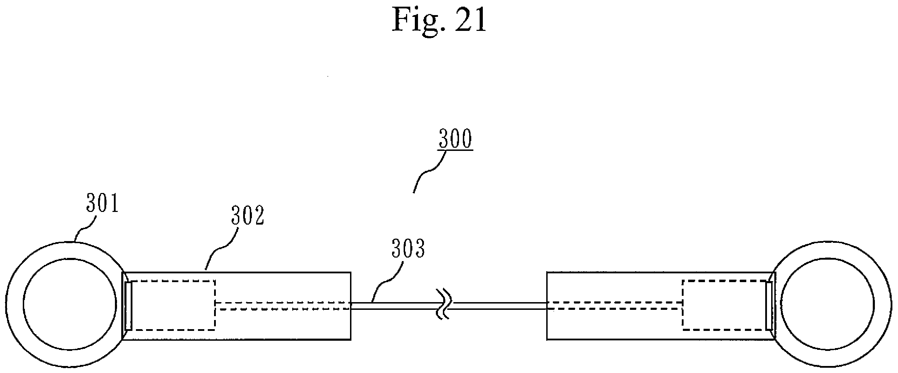

The discharge electrode 300 shown in Figs. 4 and 21 is a wire (wire-shaped body) having a circular or rectangular section. As shown in Fig. 21, the discharge electrode 300 is constituted by terminals 301, tubes 302, and a wire 303. As shown in Fig. 21, one terminal 301 and one tube 302 are provided to each end of the wire 303. As shown in Figs. 6 and 14, the wire 303 of the discharge electrode 300 is folded at the fold-back portions 680 (Fig. 14) of the intermediate frame. As shown in Fig. 6, the terminals 301 at the two ends of the wire 303 are respectively attached to the catch portions 709a of the high-voltage-side supply terminal 709 through the springs 400. High-voltage wires from the high-voltage substrate 1530 are attached to terminals 301 of the discharge electrode 300 via the high-voltage-side supply terminal 709. As shown in Fig. 6, by folding back, the wire 303 forms a plurality of arrays in the transversal direction of the discharge device 1000. In Fig. 6, the wire 303 forms four arrays. The discharge electrode 300 is made of a metal such as tungsten, copper, nickel, stainless steel, zinc, iron, or molybdenum; an alloy mainly containing such metal; or such metal plated with a precious metal such as silver, gold, or platinum.

(End Portion of Discharge Electrode 300)

As described above, ring-shaped terminals 301 for catching on the springs 400 are attached to the two end portions of the discharge electrode 300 (Figs. 6 and 21). The springs 400 apply tension to the terminals 301 so the discharge electrode 300 will not droop down. The terminals 301 are bonded to or held by the wire 303 as shown in Fig. 6 by, for example, a caulking technique of pinching the wire 303 of the discharge electrode 300 with the terminals 301 and applying a pressure to the terminals 301, or spot welding of melting the terminals 301 with an applied current, as indicated in Fig. 21. The discharge electrode 300 is attached by folding back via the left intermediate frame 600 and right intermediate frame 500, approximately once each time an array adds, as shown in Figs. 6 and 14. Hence, the discharge electrode 300 is folded back a plurality of number of times in total. When the discharge electrode 300 is folded back, it is supported by the fold-back portions 680 of the left intermediate frame 600 and right intermediate frame 500.

Since the material of the wire 303 of the discharge electrode 300 must have a high tensile strength, tungsten (chemical symbol: W) is often employed, in the same manner as with the filament of an incandescent lamp. Stainless steel is often employed as the material of the terminals 301 because of its versatility. Among stainless-steel-based materials, SUS304 which is most versatile is often employed. The wire 303 and the terminals 301 are fixed by the caulking technique, spot welding, or the like so that they will not be torn off when they are pulled by the springs 400 or the like. A potential difference of +0.36 V or more, however, exists between tungsten and SUS304. In a high-humidity atmosphere or in the presence of a singular acceleration factor, galvanic corrosion may undesirably occur. With the combination of tungsten and SUS304, the tungsten side has a lower potential (minus potential). When galvanic corrosion should occur, the tungsten side melts as it forms an oxide such as $WO_4^{(2-)}$, and eventually the wire breaks to lose its function. Since $WO_4^{(2-)}$ has a very high solubility, it dissolves in moisture attached to the surface of the wire 303. This increases the ion current (increases the conductivity) on the surface of the wire 303 and accelerates corrosion of tungsten.

In view of this, in the discharge electrode 300 of this embodiment, the terminals 301 are formed by plating the surfaces of the terminals 301 made of tin (chemical symbol: Sn), nickel (chemical symbol: Ni), or stainless steel, with tin or nickel. Then, the potential difference of +0.36 V present between the dissimilar metals of the tungsten wire 303 and the terminals 301 reduces to -0.11 V if the terminals 301 are made of tin or plated with tin, and further down to -0.01 V if the terminals 301 are made of nickel or plated with nickel. In either case, since the potential difference is very small, the possibility of corrosion is extremely small. Since the terminal 301 sides have a low potential (minus potential), they serve as sacrificial electrodes, and corrosion will not proceed on the tungsten sides. As a tin oxide and a nickel oxide have small water solubility, they will not promote corrosion even in the presence of an environmental factor or moisture. The combination of the wire 303 made of tungsten and the terminals 301 made of tin, nickel, tin-plated metal, or nickel-plated metal can reduce the probability of wire breakage, thus ensuring long-term safe use of the discharge electrode 300.

Furthermore, in the discharge electrode 300 of this embodiment, as shown in Fig. 21, inside-adhesion tubes are employed as the tubes 302 and are brought into tight contact with the entire bonding portions of the tungsten wire 303 and the terminals 301, thereby covering the entire bonding portions. An inside-adhesion tube has a double-face, two-layer structure consisting of an outer layer and an inner layer. For example, the outer layer is made of a soft polyolefin resin or the like, and the inner layer is a thermal-welding resin layer. From the viewpoint of ion current suppression, it is desirable not to use a material such as vinyl chloride containing an ion component. When a heat-shrinkable material that shrinks by 60% or more at 100°C is employed to form the tubes 302, the tubes 302 can be tightly fixed. The tubes 302 are fixed with heat at positions where they cover the bonding portions of the tungsten wire 303 and terminals 301. If the tubes 302 are longer than the bonding portions of the tungsten wire 303 and terminals 301, the tubes 302 can cover the bonding portions securely.

When an adhesive containing a waterproof component such as silicone or an epoxy resin is employed to form the inner layer of the tubes 302, moisture that accelerates corrosion and the like can be prevented. As the result, the resultant structure becomes highly resistant to corrosion. When an adhesive is employed to form the inner layer, even if the wire 303 starts to corrode and disengage from the terminals 301, the adhesive prevents the positional displacement of the wire 303 and the breakage and disconnection of the wire 303. Therefore, the terminals 301 can hold the wire 303 at a regulated position for a long period of time.

As the tubes 302 cover the terminals 301, in the assembling operation, the operator can assemble the wire 303 into the device easily by holding the tubes 302 with fingers. In the vicinities of the terminals 301 connected by caulking, spot welding, or the like, the wire 303 has a low bending strength, and can undesirably be broken by, for example, bending or twisting in an arbitrary direction. If, however, the tubes 302 cover the terminals 301, the bending strength improves, and the wire 303 will not be broken even when it is bent several times in the arbitrary direction.

If the tubes 302 are not inside-adhesion tubes, although a waterproof function cannot be obtained, the bending strength is expected to improve. In this case, in the same manner as described above, using a heat-shrinkable material to form the inner layer of the tubes 302, the terminal 301 sides which are sufficiently wider than the wire 303 are fixed to the tubes 302 by heat shrinkage. Both the terminal side and the wire 303 side may be subjected to heat shrinkage. If the wire 303 side is not subjected to heat shrinkage, one surface does not form a fixed end, and the bending strength can be improved more effectively.

As described above, tungsten is used to form the wire 303, and tin, nickel, a tin-plated metal, or a nickel-plated metal is used to form the terminals 301. The terminals 301 are covered by the tubes 302. This structure can reduce the possibility of breakage in the discharge electrode 300, ensuring long-term safe use of the discharge electrode 300.

(Material of Counter Electrode 700, etc)

The counter electrode 700 is formed from a metal such as stainless steel. Alternatively, a conductive resin containing carbon or the like to reduce the resistance to approximately $10^4 \, \Omega/\text{cm}$ may be used to form the counter electrode 700. An earth wire (GND) is connected to the counter electrode 700 by welding, caulking, or the like, or through the low-voltage-side connecting portion 710 (Fig. 4) integrally formed with the counter electrode 700. To form the counter electrode 700, a plurality of flat plates fabricated separately may be disposed parallel to each other and be connected to respective metal plates or the like. This, however, requires many fixing portions and a long assembly time. Hence, if the counter electrode 700 is to be particularly compact and low-profile, or is to be formed with a high mass-productiveness at a low cost, the counter electrode 700 is preferably formed from a single component (a single member). As the conductive resin poses issues of poor earthing and cost, it is desirable that the counter electrode 700 be formed from metal (a single metal plate).

(Structure of Counter Electrode 700)

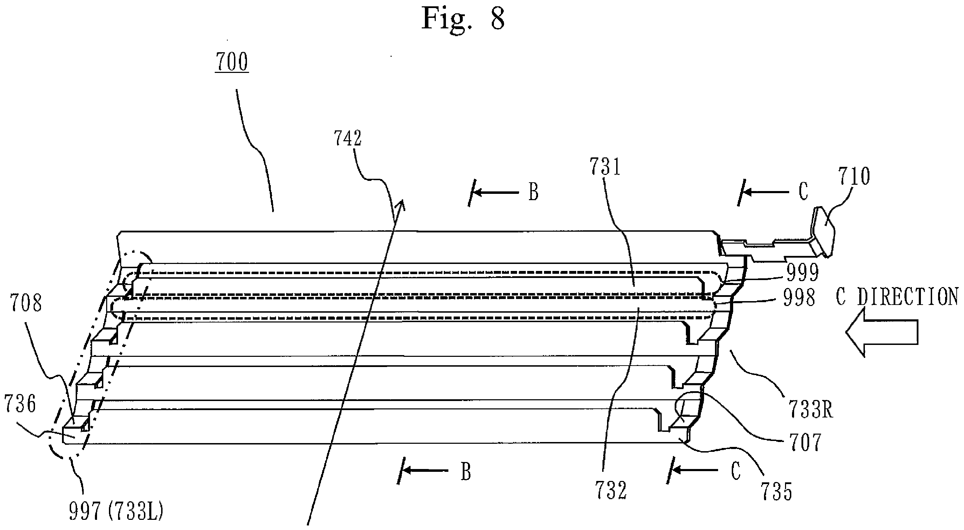

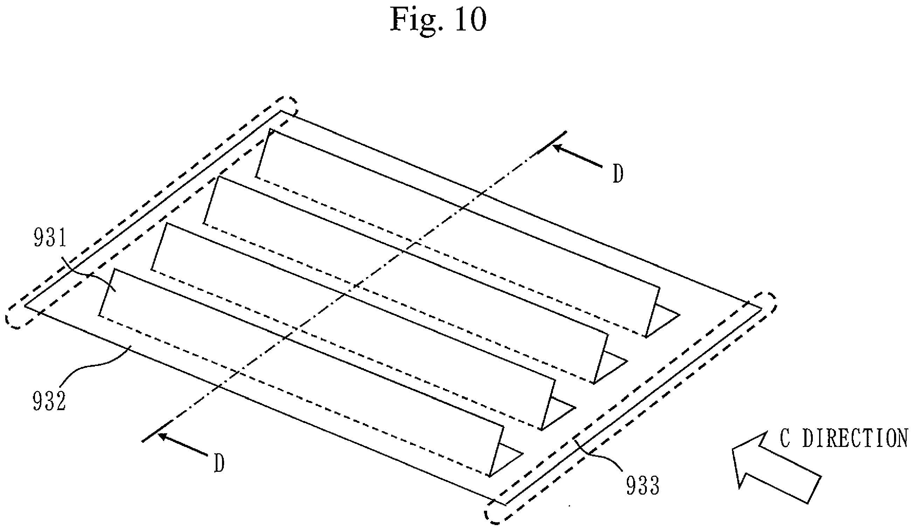

As shown in Fig. 8, the counter electrode 700 is formed of flat-plate portions 731, belt portions 732, and the connecting portions 733. As shown in Fig. 8, the flat-plate portion 731 is a portion surrounded by a broken line 999, the belt portion 732 is a portion surrounded by a broken line 998, and the connecting portion 733 is a portion surrounded by an alternate long-and-two-short-dashes line 997. The belt portion 732, being indicated to clarify the difference with respect to the counter electrode of Fig. 10 (to be described later), is substantially part of the flat-plate portion 731. As shown in Fig. 8, the counter electrode 700 is formed of the connecting portions 733 which connect the plurality of flat-plate portions 731 in the longitudinal direction on the right and left sides of the flat-plate portions 731. Namely, the flat-plate portions 731 have elongated shapes and form flat plates disposed almost parallel to each other. The connecting portions 733 consist of a first connecting portion 733R and a second connecting portion 733L. The first connecting portion 733R connects one-end portions of the elongated shapes of the plurality of flat-plate portions. The second connecting portion 733L connects the other-end portions of the elongated shapes of the plurality of flat-plate portions. The first connecting portion 733R and the second connecting portion 733L are collectively referred to as the connecting portion 733.

The first connecting portion 733R includes first projecting portions 735 of the respective flat-plate portions 731, and first connecting pieces 707. The first projecting portions 735 project in the lengthwise direction from under the one-end portions of the elongated shapes of the flat-plate portions 731. Each first connecting piece 707 is provided to two adjacent flat-plate portions 731. The first connecting pieces 707 extend each from the upper end of the first projecting portion 735 of the flat-plate portion, out of the two adjacent flat-plate portions 731, which is located on the front side in a line-up direction 742 along which the plurality of flat-plate portions 731 line up sequentially, and each connect to the lower end of the first projecting portion 735 of the next flat-plate portion 731. As with the first connecting portion 733R, the second connecting portion 733L includes second projecting portions 736 and second connecting pieces 708.

In Fig. 12, both (a) and (b) show sections each taken along a line C - C of Fig. 8.

As shown by (b) of Fig. 12, at least one first connecting piece 707 has a bend portion 741 between the upper end of the first projecting portion 735 and the lower end of the next first projecting portion 735 so as to form a downward convex. Similarly, at least one second connecting piece 708 has a downwardly convex bend portion 741. In Fig. 12, (a) shows a case where there is no bend portion 741. When the discharge electrode 300 and the connecting portion 733 are more spaced apart from each other as in (b) of Fig. 12 than in (a) of Fig. 12, abnormal electric discharge and unnecessary electric discharge between the discharge electrode 300 and the connecting portion 733 can be avoided, so that electric discharge can be caused stably and the electric field can be formed stably. Although the structure in (b) of Fig. 12 is preferable, the structure in (a) of Fig. 12 is acceptable.

As shown by (b) of Fig. 12, the connecting portion 733 of the counter electrode 700 has, in its section, an upper bend portion 751 which is convex toward the upper frame 200 side (upward), and the bend portion 741 which is convex downward.

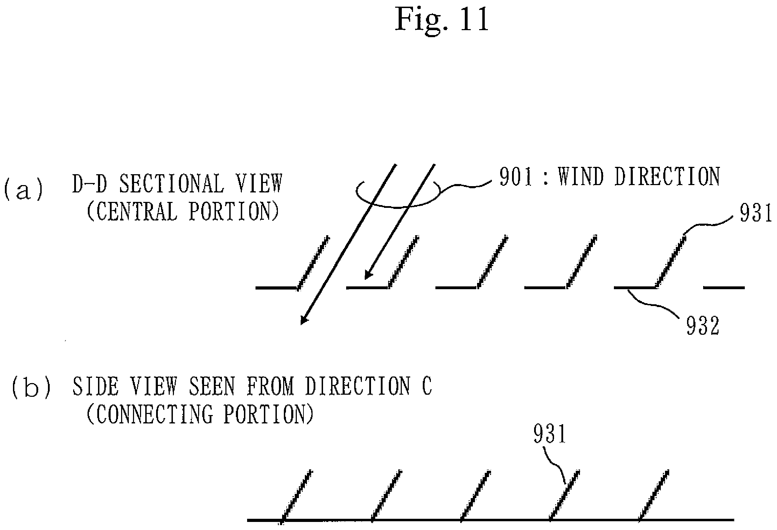

Assume a conventional structure shown in Fig. 10 in which flat-plate portions 931 (corresponding to the flat-plate portions 731) are cut and raised from a large plate. This structure includes belt portions 932 (Fig. 11) which are left after the flat-plate portions 931 are cut and raised from the metal plate, and which connect to the corresponding flat-plate portions 931 in the longitudinal direction and to a connecting portion 933 (corresponding to the connecting portion 733) in the horizontal direction.

In Fig. 11, (a) shows a section (central portion) taken along a line D - D of Fig. 10, and (b) is a side view (indicating the connecting portion 933) seen from the C direction of Fig. 10. In Fig. 11, (a) shows a wind direction 901.

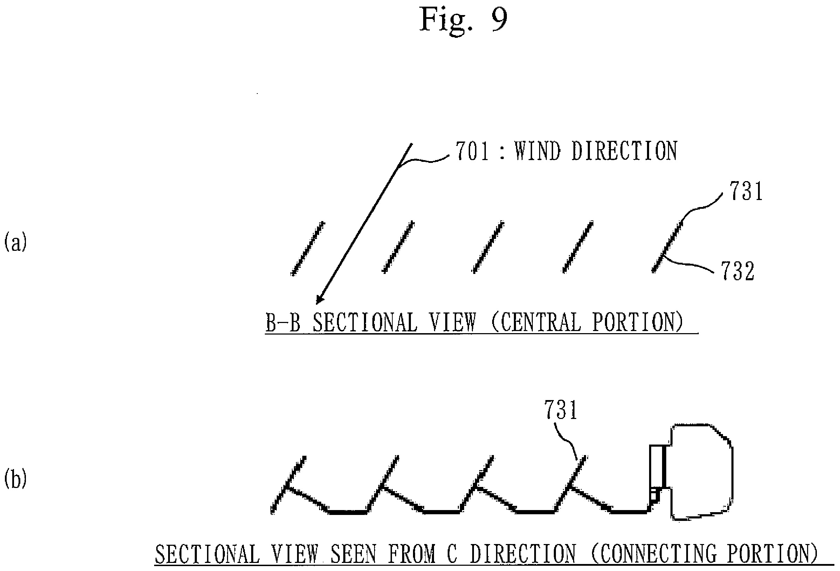

The conventional belt portions 932 form walls against the in-flow wind that flows at an angle, as shown in Fig. 11. Accordingly, a large pressure loss is generated to increase the power consumption of the air conditioner. From the viewpoint of pressure loss decrease, it is preferable if the belt portions 932 are eliminated. If, however, the counter electrode 700 is formed from a single component (a single metal plate), the belt portions 932 are inevitably formed in the manufacturing process, which is an issue. In view of this, the present application employs the shapes of Figs. 8 and 9.

In Fig. 9, (a) shows a section (central portion) taken along a line B - B of Fig. 8, and (b) shows a section (connecting portion) taken along a line C - C of Fig. 8. In Fig. 9, (a) shows a wind direction 701.

(Counter Electrode 700)

In addition, in the discharge device 1000, in order to decrease the pressure loss of the flat-plate portions 731 of the counter electrode 700, the flat-plate portions 731 are formed to be inclined at an angle θ with respect to the surface of the lower frame 800 (Fig. 7) considering the wind in-flow direction. When the flat-plate portions 731 are inclined at the predetermined angle θ with respect to the aperture areas of the upper frame 200 and lower frame 800, the inclination of the flat-plate portions 731 of the counter electrode 700 attached to the lower frame 800 does not interfere with the wind flow. The direction of the flat-plate portions 731, being an angle θ, of the counter electrode 700 is most desirably parallel to the direction of the wind in-flow, being an angle θ (w) (θ (w) - θ). When the difference between the angle θ of the flat-plate portions 731 of the counter electrode 700 and the wind in-flow angle θ (w) is suppressed between 0° (parallel) and 30°, the influence of the pressure loss can be decreased to a negligible level. On the contrary, if the angle θ of the flat-plate portions 731 is larger than the wind in-flow angle θ (w) by more than 30°, the power consumption of the air conditioner 3000 is increased obviously. More specifically, with the product being built in the air conditioner, if the increase in power consumption caused by the wind flow interference can be suppressed to 1 W or less at the maximum air quantity, then the influence of the pressure loss can be regarded to be small.

(Shape of Discharge Electrode 300)

The diameter of the section of the discharge electrode 300 is approximately 0.05 mm to 0.10 mm if the wire section is circular. When a high voltage is applied to the discharge electrode 300, as the local electric field strength starts to exceed 10 kV/cm, electric discharge occurs and an electric field is formed radially in 360° directions. The smaller the diameter of the wire 303, the higher the electric field strength, and the electric discharge occurs easily and the electric field is formed easily. Since the sectional area decreases, the tensile strength lowers, and the wire 303 tends to be fractured easily.

(When Wire 303 has Rectangular Section)

As opposed to this, if the discharge electrode 300 has a rectangular wire section formed of long sides and short sides, each long side is 0.1-mm to 1.0-mm long, and each short side is 0.01- to 0.2-mm long. In the wire 303 having a rectangular section, since the short side is shorter than the long side, the electric field is concentrated on the short side, and the electric discharge mostly occurs near the short side. As there are two short sides, electric discharge occurs at two portions.

(Long-Side/Short-Side Ratio of Wire 303)

The ratio of the long side to the short side (long-side/short-side) is about 1 to 10. By increasing this ratio, the sectional area can be increased while keeping the short sides (while allowing easy electric discharge). As a result, the effect of increasing the tensile strength and breakage resistance can be obtained while maintaining the electric discharge. When this ratio is increased, the sectional area can be further increased while keeping the short sides (while allowing easy electric discharge). As a result, the electric field occurring portion enlarges, so that the electric field further widens. Also, the average electric field strength covering from the discharge electrode 300 to the counter electrode 700 increases. Therefore, the effect of inactivating the airborne viruses and airborne germs moving across the electric field space increases.

The wire 303 of the discharge electrode 300 is disposed with respect to the counter electrode 700 in the following manner. As in (b) of Fig. 12, the wire 303 is disposed such that the long sides of the rectangle are perpendicular (Z direction in (b) of Fig. 12) to the lower frame 800 and that the short sides of the rectangle are parallel (X direction in (b) of Fig. 12) to the lower frame 800. In brief, the flat-plate portions 731 are formed to be inclined at the angle θ with respect to the lower frame 800, while the discharge electrode 300 is set almost perpendicular (in parallel) to the lower frame 800 instead of being set to be inclined with respect to the lower frame 800.

The flat-plate portion is inclined at a predetermined angle θ with respect to a virtual reference plane 752 (Fig. 7) perpendicular to a virtual plane having a direction of normal that coincides with the line-up direction 742. As in (b) of Fig. 12, the wire 303 of the electric discharge electrode is disposed such that the short sides of the rectangles are almost parallel to the virtual reference plane 752. When the wire 303 is displaced in this manner, the wire 303 will not be fractured easily, and the electric field strength is enhanced.

(Size of Wire 303)

If the sectional area of the wire 303 is large, the wire of the discharge electrode 300 can be held by the hand more easily, facilitating assembly including pulling and bending. More specifically, if the ratio of the long side to the short side is 3 or more, each long side is 0.2-mm long or more, each short side is 0.03-mm long or more, and the sectional area is 0.01 $mm^2$ or larger, then wire breakage is less likely to occur, the assembly becomes easier, and electric discharge is caused more easily in the short sides 2b. If the ratio of the long side to the short side is 6 or more, each long side is 0.3-mm long or more, each short side is 0.04-mm long or more, and the sectional area is 0.015 $mm^2$ or larger. Then, obviously, wire breakage is less likely to occur, the assembly becomes easier, and electric discharge is caused more easily in the short sides 2b, than with the conventional discharge electrode having a circular section. At this time, the electric field is not concentrated around the short sides unless the short sides are 0.1-mm long or less. Hence, preferably, the short sides are 0.04-mm long or more and 0.1-mm long or less. The electric field is not concentrated around the short sides unless the long sides are 0.6-mm long or less. Then, a large voltage of as high as 7 kV is required to obtain the same discharge current. Hence, preferably, the long sides are 0.3-mm long or more and 0.6-mm long or less. Under these conditions, electric discharge can be caused by a voltage of 6 kV or less, and the high-voltage power supply can be formed at a low cost. The conventional, general discharge electrode has a radius of 0.1 mm and a sectional area of 0.0076 $mm^2$. Hence, the plate-like discharge electrode described above has a sectional area about twice that of the conventional, general discharge electrode. As a result, the tensile strength increases, and wire breakage is unlikely to occur.

When the sectional area of a discharge electrode having a rectangular section is increased to be larger than that of a discharge electrode having a circular section, the quantity of electric charge increases for the same voltage applied. The average electric field strength in the space increases by 20% to 40%, and the effect of inactivating the viruses and germs increases.

In the electrode of the conventional wire having a circular section, corrosion proceeds from the entire circumferential surface due to deterioration caused by the electric discharge, dust, moisture, and environmental factors. When the ratio of the long side to the short side is set to 3 or more, a stress acts, and the corrosion proceeds from the vicinities of the short sides where the electric discharge is concentrated. Even when corrosion proceeds from the short-side sides, it does not on the long-short sides, so that the wire will not break easily when compared to a wire having a circular section. Therefore, the wire having a rectangular section has a high environmental resistance over a long period of time, and can be used stably.

(Rounded Corner R of Wire 303)

The corner portion of the discharge electrode 300, that is, a rounded corner portion R1 where the short side and the long side intersect has a radius of curvature R1 of 0.001 mm to 0.1 mm.

Namely, the radius of curvature R1 satisfies

$$0.001 \text{ mm} \leq R1 \leq 0.1 \text{ mm}$$

The smaller the radius of curvature R1, the more the electric field is concentrated on the short sides. Hence, the radius of curvature R1 is preferably 0.01 mm or less.

Namely, the radius of curvature R1 preferably satisfies

$$0.001 \text{ mm} \leq R1 \leq 0.01 \text{ mm}$$

(Upper Ribs 201 of Upper Frame 200, Lower Ribs 844 of Lower Frame 800)

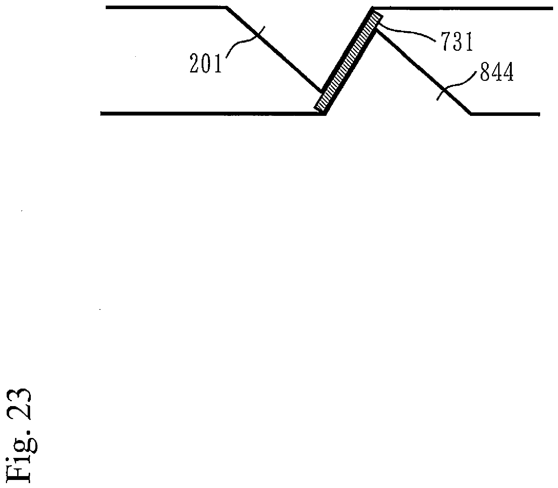

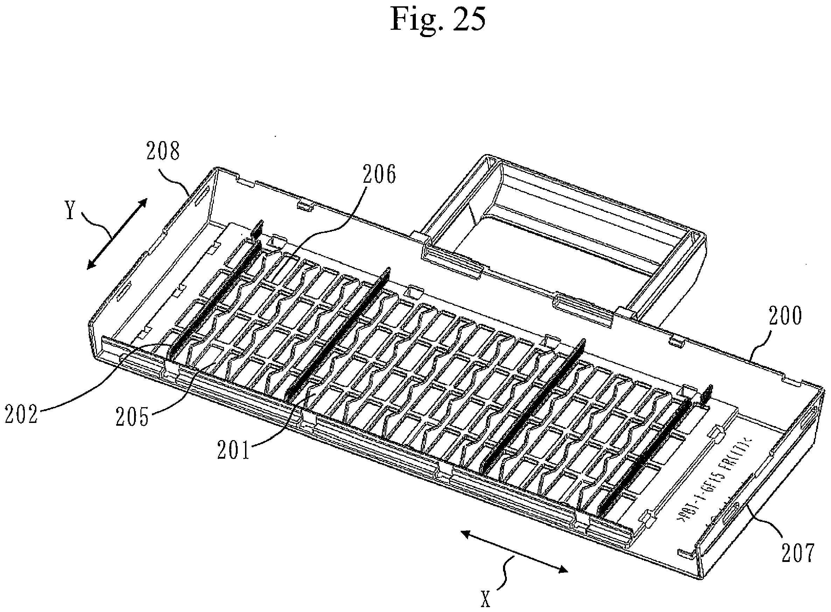

Fig. 7 is a detailed view of the counter electrode 700 in a case where the flat-plate portions 731 of the counter electrode 700 are inclined by an angle θ with respect to the surface of the lower frame 800. A method of decreasing the pressure loss and a method of fixing the flat-plate portions 731 of this case will be described. Fig. 23 shows the relationship among the flat-plate portion 731 of the counter electrode 700, an upper rib 201, and a lower rib 844. The upper frame 200 is provided with upper ribs 201 (Fig. 25) integrally attached to the upper frame 200 to support the counter electrode 700. The upper ribs 201 extend vertically from the upper frame 200 downward in the height direction of the upper frame 200. The lower frame 800 has the lower ribs 844 (Figs. 16 and 17) integrally attached to the lower frame 800 to support the counter electrode 700. The lower ribs 844 extend vertically from the lower frame 800 upward in the height direction of the lower frame 800.

The lower frame 800 located under the connecting portion 733 of the counter electrode 700 has portions with shapes (lower holding portions 801; Fig. 4) having almost the same shapes as the bend shapes of the connecting portions 733 so as to match the bend shapes of the connecting portions 733. More specifically, the lower frame 800 has the lower holding portions 801 (Fig. 4) with shapes that match the shapes of the connecting portions 733 (the first connecting portion 733R, the second connecting portion 733L), and supports the connecting portions 733 (the first connecting portion 733R, the second connecting portion 733L) from below with the lower holding portions 801.

(How to Retain Flat-Plate Portions 731)

As described above, the flat-plate portions 731 of the counter electrode 700 are disposed at the predetermined angle θ with respect to the surface of the lower frame 800 (Fig. 7). As shown in Fig. 23, each flat-plate portion 731 is fixed as it is sandwiched by two ribs; the upper rib 201 of the upper frame 200 and the lower rib 844 of the lower frame 800. Note that Fig. 23 shows the relationship among the flat-plate portion 731, the upper rib 201, and the lower rib 844 on, for example, an arrow Y of Fig. 17. The upper ribs 201 (Fig. 25) have shapes similar to those of the lower ribs 844. Accordingly, even when the angle θ of the flat-plate portions 731 with respect to the lower frame 800 changes due to a molding error or because the flat-plate portions 731 come into contact with the lower frame 800 during assembly, the flat-plate portions 731 can be corrected to "the predetermined angle θ". Also, the flat-plate portions 731 will not droop down over time. The flat-plate portions 731, the belt portions 732, and the connecting portions 733 of the counter electrode 700 are set on the lower frame 800. At this time, the connecting portions 733 (Fig. 8) on the two, right and left ends are brought into sufficient contact with the lower frame 800, and are retained by the right intermediate frame 500 and left intermediate frame 600 from above. As the lower ribs 844 (Figs. 16 and 17) are provided on the grid (Fig. 17) provided to the lower frame 800, they will not cause pressure loss.

(Shape of Counter Electrode 700)

As shown in Fig. 8, in the counter electrode 700, the flat-plate portions 731 are cut and raised by bending at the connecting portions 733 located at the same heights as the flat-plate portions 731, or at heights lower than the flat-plate portions 731 in the height direction. The flat-plate portion 731 at the highest portion in the longitudinal direction is bent downward at an upper portion in the longitudinal direction. The flat-plate portion 731 at the lowest portion in the longitudinal direction is bent upward at a lower portion in the longitudinal direction. This eliminates the belt portions 732 at the two end sides in the longitudinal direction, and the pressure loss reduces. As a result, the aerodynamic performance improves, and the power consumption of the indoor blower fan decreases.

(Counter Electrode 700: Even Number)

When an even number of flat-plate portions 731 are to be provided, a plurality of pairs of flat-plate portions 731 are formed to connect to the connecting portions 733, each pair of flat-plate portions 731 consisting of a flat plate bent downward at the upper portion in the longitudinal direction and a flat plate bent upward at the lower portion in the longitudinal direction. This eliminates the belt portions 732 at the two end sides in the longitudinal direction, and the pressure loss decreases. As a result, the aerodynamic performance improves, and the power consumption of the indoor blower fan decreases.

(Counter Electrode 700: Odd Number)

When an odd number of flat-plate portions 731 are to be provided, a plurality of pairs of flat-plate portions 731 are formed to connect to the connecting portions 733, each pair consisting of a flat plate bent downward at the upper portion in the longitudinal direction and a flat plate bent upward at the lower portion in the longitudinal direction. The flat-plate portion 731 at the highest portion in the longitudinal direction is bent downward at the upper portion in the longitudinal direction as a flat-plate portion that does not form a pair, or the flat-plate portion 731 at the lowest portion in the longitudinal direction is bent upward at the lower portion in the longitudinal direction as a flat-plate portion that does not form a pair. This eliminates the belt portions 732 at the two end sides in the longitudinal direction, and the pressure loss decreases. As a result, the aerodynamic performance improves, and the power consumption of the indoor blower fan decreases.

(Counter Electrode 700)

Instead of cutting and raising the flat-plate portions 731 by bending at the connecting portions 733 located at the same height as the flat-plate portions 731, or at heights lower than the flat-plate portions 731 in the height direction, if the flat-plate portions 731 are bent at their halfway portions, belt portions 732 are formed inevitably. If the flat-plate portion 731 at the position portion in the longitudinal direction is not bent downward at the upper portion in the longitudinal direction, or if the flat-plate portion 731 at the lowest portion in the longitudinal direction is not bent upward at the lower portion in the longitudinal direction, the belt portion 732 is also formed inevitably. Then, the pressure loss increases. The length in the longitudinal direction increases by an amount corresponding to the belt portion 732, thus degrading the space efficiency. If the counter electrode 700 is divided into a plurality of portions without connecting the flat-plate portions 731, the production cost increases.

(Counter Electrode 700)

The counter electrode 700 is set on the lower frame 800 and held by the lower frame 800. If the counter electrode 700 is retained from above in the height direction by the lower surface of a frame (the intermediate frame or the upper frame 200) located above the counter electrode 700, the counter electrode 700 will not move vertically and thus can be fixed. At this time, since the intermediate frame or the upper frame 200 retains the two near-end portions in the horizontal direction of the counter electrode 700, the intermediate frame or the upper frame 200 itself does not interfere with the wind passage.

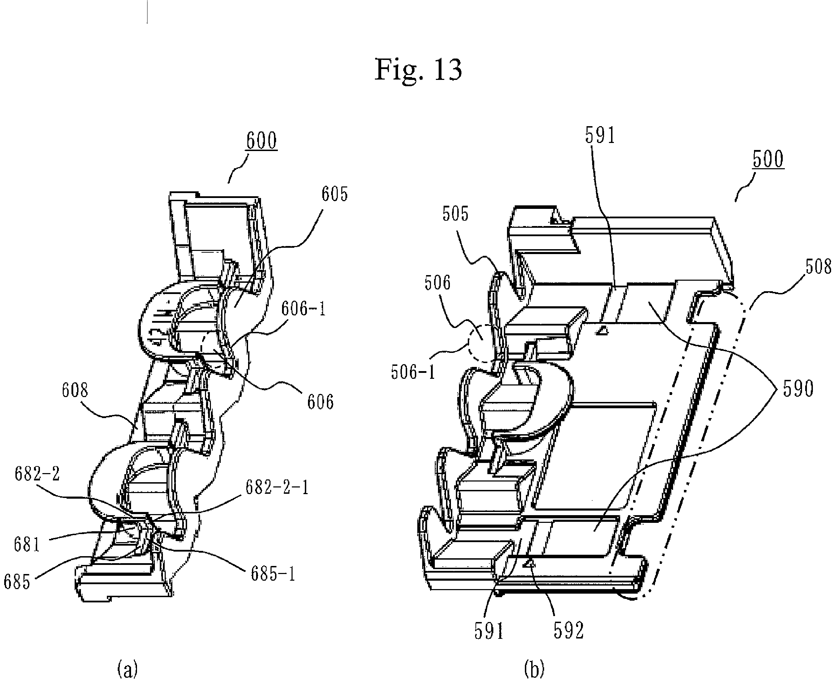

As shown in Fig. 4, the right intermediate frame 500 and the left intermediate frame 600 shown in Fig. 13 cover the connecting portions 733 (the first connecting portion 733R, the second connecting portion 733L) of the counter electrode 700 so the connecting portions 733 will not be exposed, thereby insulating the connecting portions 733. The connecting portions 733 are set on the lower frame 800.

As with the lower frame 800, the right intermediate frame 500 and the left intermediate frame 600 located on the connecting portions 733 of the counter electrode 700 respectively have upper holding portions 501 and 601 (Fig. 4) with shapes that match the shapes of the connecting portions 733 (first connecting portion 733R, second connecting portion 733L), and hold the connecting portions 733 (first connecting portion 733R and second connecting portion 733L) of the counter electrode 700 from above with the upper holding portions 501 and 601, as shown in Fig. 4. In this manner, the bend shapes of the connecting portions 733 are fixed by vertically sandwiching them by the right intermediate frame 500 and left intermediate frame 600, and the lower frame 800.

(1) By fixing the connecting portions 733 in this manner, angular displacement and drooping down over time of the flat-plate portions 731 are prevented, so that the flat-plate portions 731 can be fixed at the forced angle. Therefore, a constant distance can be maintained between the discharge electrode 300 and the flat-plate portions 731 of the counter electrode 700, electric discharge occurs stably and electric field can be formed stably.

(2) The intermediate frame covers the connecting portions 733 of the counter electrode 700 so that the discharge electrode 300 and the connecting portions 733 are insulated from each other. Even though the distance between the discharge electrode 300 and the connecting portions 733 as covered by the intermediate frame is short, unnecessary electric discharge does not occur. In this manner, by covering the connecting portions 733 with the intermediate frame, the distance between the discharge electrode 300 and the counter electrode 700 can be shortened, so that the entire thickness of the discharge device 1000 can be decreased.

Since unnecessary electric discharge between the discharge electrode 300 and the connecting portions 733 is suppressed, electric discharge occurs stably, and the electric field can be formed stably. Since the connecting portions 733 and the intermediate frame which serves as the holding portion of the discharge electrode 300 are set on the end portions of the device by stacking, a large aperture area can be reserved in the widthwise direction.

In the lower frame 800, the high-voltage-side supply terminal 709 (high-voltage power supply portion) to supply power to the discharge electrode 300 is disposed on the high-voltage terminal holding portion 841 (Fig. 17). As shown in Fig. 4, the right intermediate frame 500 covers at least part of the high-voltage-side supply terminal 709. Alternatively, the high-voltage terminal holding portion 841 may be provided on a side covered by the left intermediate frame 600, and the left intermediate frame 600 may cover the high-voltage-side supply terminal 709.

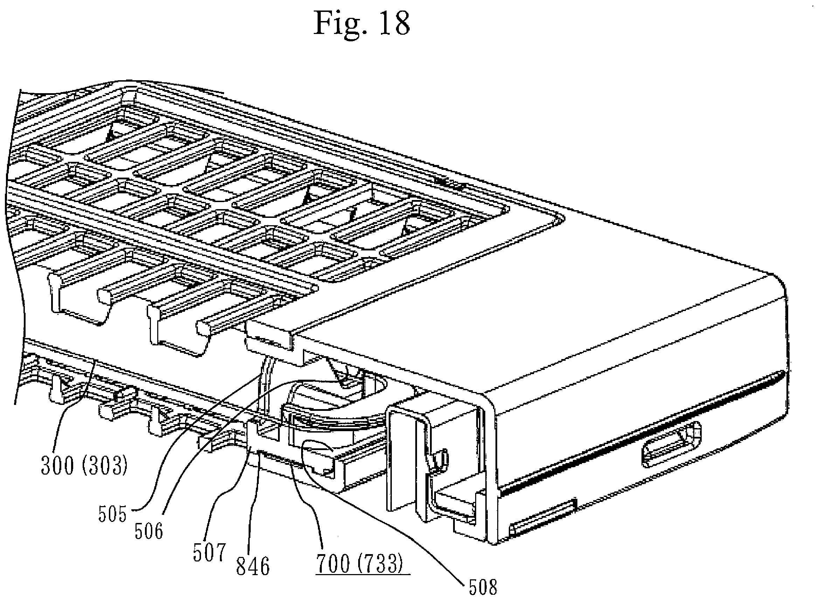

As shown in Figs. 13 and 18, an insulation wall 505 vertically standing from the bottom surface of the right intermediate frame 500 is formed on the side surface of the right intermediate frame 500, on the device central side (the left intermediate frame 600 side) of the right intermediate frame 500.

(Notches 506, 606)

More specifically, the right intermediate frame 500 has the insulation wall 505 made of an insulating material. The insulation wall 505 stands upward along the end portions of the plurality of flat-plate portions 731 arranged almost parallel to each other, and has notches 506 through which the discharge electrode 300 is to extend. Similarly, the left intermediate frame 600 has an insulation wall 605 and notches 606 (Fig. 14). When the insulating walls are to the intermediate frame in this manner, the clearance and the creeping distance between the discharge electrode 300 and the connecting portions 733 can be increased. Undesirable electric discharge can accordingly be prevented, so that the device can be made with a low profile. The notches 506 and 606 respectively formed in the right intermediate frame 500 and the left intermediate frame 600, through which the discharge electrode 300 is to extend, have each a U- or V-letter shape so that the discharge electrode 300 can extend through it. As shown in Fig. 13, the notches 506 and 606 open upward (openings 506-1, openings 606-1) and close downward. Fig. 13 shows V-letter shaped notches. When the notches 506 and 606 are U-letter shaped, their breadths are substantially the same from top to bottom. When the notches 506 and 606 are V-letter shaped, their breadths gradually decrease from top (from the upper frame) to bottom (toward the lower frame). With this design, in the assembly operation, the discharge electrode 300 will not be caught by the insulating walls 505 and 605 at a position higher than a predetermined height. The openings of the notches serve as indices that facilitate assembly. The insulation walls 505 and 605 can reliably prevent abnormal discharge at the counter electrode 700.

As shown in Fig. 13, an end portion of the right intermediate frame 500 (first upper frame) away from the insulation wall 505 and an end portion of the left intermediate frame 600 (second upper frame) away from the insulation wall 605, in the lengthwise direction of the flat-plate portions 731, are flat, thus forming a flat portion 508 and a flat portion 608. Namely, the right-side end portion of the right intermediate frame 500 and the left-side end portion of the left intermediate frame 600 form the flat portions 508 and 608, respectively (Fig. 13). As the right-side end portion of the right intermediate frame 500 and the left-side end portion of the left intermediate frame 600 are formed flat in this manner, when putting the discharge electrode 300 (mainly the wire 303) in the intermediate frame, the assembly operation of, for example, fitting terminals in the power supply portion can be performed easily without being interfered with by the walls or ribs. As shown in Fig. 13, the heights of the flat portions 508 and 608 of the right- and left-side end portions of the right and left intermediate frames 500 and 600 are lower than the height of the wire 303 of the discharge electrode 300 set in the device (Figs. 14 and 18). With this arrangement, when the operator is to draw out the discharge electrode 300 by holding the discharge electrode 300 with the fingers, the intermediate frame will not interfere with the operator's hands, thus facilitating the assembly operation. Also, the heights of the right- and left-side end portions of the lower frame 800 are lower than the height of the wire 303 set in the device. With this arrangement, when the operator is to draw out the discharge electrode 300 by holding the discharge electrode 300 with the fingers, the lower frame 800 will not interfere with the operator's hands, thus facilitating the assembly operation. The intermediate frame is fixed to engage with claws 851 to 854 (Figs. 16 and 17) provided at the right- and left-side end portions of the lower frame 800. Therefore, the height of the end portion of the intermediate frame is lower than the height of the end portion of the lower frame 800. The lower frame 800 cannot form the lateral side surfaces of the device. Thus, the lateral side surfaces of the device are formed by the upper frame 200 (side surface portions 207 and 208 of the upper frame 200 shown in Fig. 25 (to be described later)), and the discharge electrode 300 is drawn out. Then, finally, the upper frame 200 is fixed by fitting it in the lower frame 800 from above.

(Extending Portion 507)

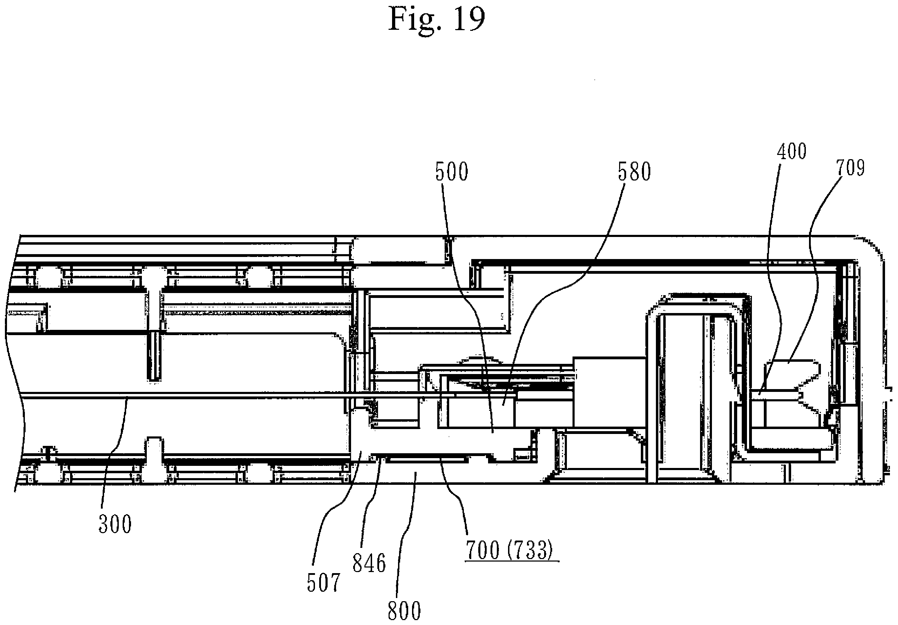

In the right intermediate frame 500, as shown in Figs. 18 and 19, the insulation wall 505 has an extending portion 507 extending closer to the lower frame 800 than the lower portion of the connecting portion 733. As shown in Figs. 18 and 19, the extending portion 507 extends from the base of the insulation wall 505 toward the lower frame 800, and together with a lower-frame protruding portion 846 of the lower frame 800, isolates the connecting portion 733 from the discharge electrode 300. A similar extending portion 607 is formed on the left intermediate frame 600, and a lower-frame protruding portion 846 is formed on the left intermediate frame 600 side of the lower frame 800 as well. When the extending portions 507 and 607 are formed in this manner by extending the insulation walls 505 and 605, the clearance and the creeping distance between the discharge electrode 300 and the flat-plate portions 731 can be increased. As a result, unnecessary electric discharge can be prevented more reliably, and the device can be made to have a lower profile.

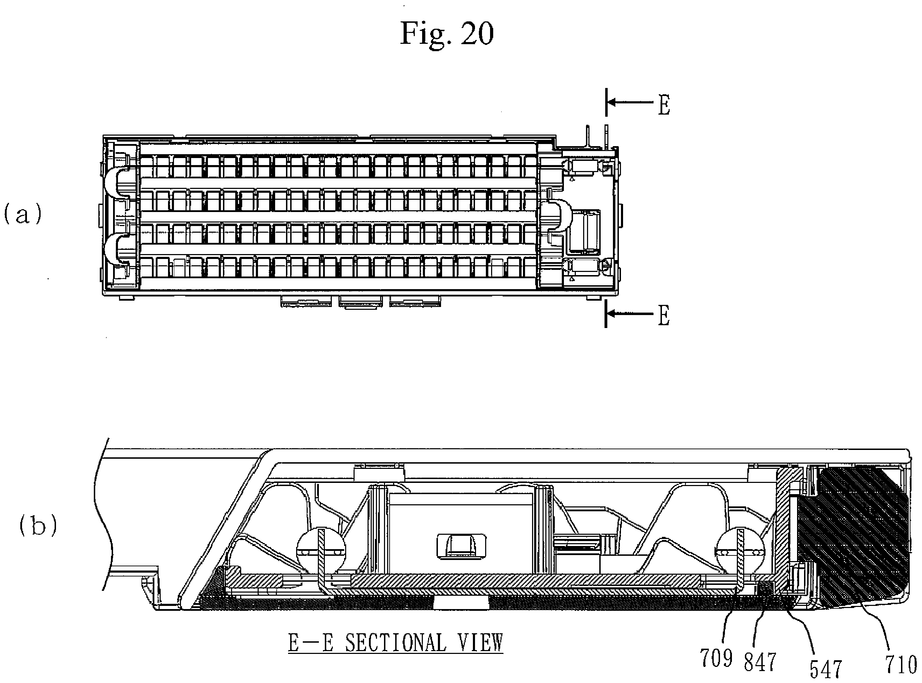

In Fig. 20, (a) is a top view seen from above, similar to Fig. 6, of the discharge device 1000, and (b) shows a section taken along a line E - E of (a).

Fig. 20 shows a structure in which the clearance and the creeping distance between the low-voltage-side connecting portion 710 and the high-voltage-side supply terminal 709 are increased, so that unnecessary discharge can be prevented and the device can be made to have a low profile. As shown in Fig. 20, the lower frame 800 is provided with a lower-frame protruding portion 847, and the right intermediate frame 500 is provided with an intermediate-frame protruding portion 547. The functions of the protruding portions 847 and 547 are the same as that of the extending portion 507 described above. The lower-frame protruding portion 847 and intermediate-frame protruding portion 547 which are made of an insulating material engage with each other to insulate the low-voltage-side connecting portion 710 and the high-voltage-side supply terminal 709 from each other, thereby increasing the clearance and the creeping distance between them.

(Fold-Back Portion 680)

As shown in Fig. 14, the left intermediate frame 600 has the fold-back portions 680 where the discharge electrode 300 (wire 303) is folded back. In each fold-back portion 680, an upright raised portion 681 having an almost U-letter shaped horizontal section faces left (X direction and to the outer side of the device). A start region 683 and an end region 683 of the U letter of the raised portion 681 are almost linear (in the U-letter shaped section) and extend in the lengthwise direction (X direction) of the flat-plate portion 731. The fold-back portion 680 has a cap portion 682 above the raised portion 681. The cap portion 682 has an arcuated distal end and projects like a flange. The presence of the fold-back portions 680 allows the discharge electrode 300 to be built in smoothly due to the following reasons (1) to (3) and the like.

The reasons (1) to (3) will be explained.

(1) The fold-back portion 680 positions the upper side of the wire 303 with the cap portion 682 and the lower side of the wire 303 with a rib (upright wall 685) at the wire exit. Hence, the upper and lower regulating portions of the wire 303 are staggered in the X direction, thereby vertically positioning the wire 303. As shown in Fig. 14, the fold-back portion 680 has the raised portion 681 and the cap portion 682 above the raised portion 681. The raised portion 681 stands from the left intermediate frame 600 and has an almost U-letter shaped horizontal section. The cap portion 682 has a cap-like shape with the distal end projecting to form a flange. As shown by the left intermediate frame 600 of Fig. 6, the distal end shape of the cap portion 682 (the distal end shape of the flange) has an arcuated portion 682-1 to the outer side of the device in the X direction, and a linear portion 682-2 to the inner side of the device in the X direction. The wire 303 is indicated by a broken line on the cap portion 682 in Fig. 6. The arcuated portion 682-1 of the cap portion 682 forms a flange shape that projects to the outer side of the device in the X direction from the side surface of the raised portion 681 (Fig. 14). The end portion of the linear portion 682-2 almost coincides with the flat portion (linear portion) of the raised portion 681, and no flange shape exists in this end portion. As shown in Fig. 14, at the end portion of the raised portion 681 to the inner side of the device in the X direction, the plate-like upright wall 685 stands from the left intermediate frame 600. As shown in Fig. 14, the upper end position of the upright wall 685 in the height direction (Z direction) is located under (and thus lower than) the lower surface of the arcuated portion 682-1 of the cap portion 682 in the height direction (Z direction). As shown in Fig. 14, the arcuated portion 682-1 (the portion where the flange shape exists) and the upright wall 685 are respectively on the left and right sides in the X direction.

In the discharge device 1000, the fold-back portion 680 positions the wire 303 by regulating the wire 303 with the lower surface of the arcuated portion 682-1 on the left side in the X direction and the upper end of the upright wall 685 on the right side in the X direction. As the wire 303 is positioned while staggering the regulating portions of the wire 303 to the left and right (X direction), the wire 303 can be attached more easily than in a case where, for example, a groove is formed in the side surface of the raised portion 681 to guide the wire 303. As the height of the discharge electrode 300 is constant in the vertical direction, the electric discharge space and the electric field space can be formed stably.

(2) The cap portion 682 of the fold-back portion 680 is formed only of a plurality of curved surfaces, and the rounded portion where the wire 303 runs bulges largely. Thus, the wire 303 will not catch on the cap portion 682.

More specifically, in the discharge device 1000, when considering the arcuated portion 682-1 of the cap portion 682 as part of a cylinder, the side surface of the arcuated portion 682-1 is formed only of the plurality of rounded surfaces (a plurality of side surfaces R1, R2, and the like in Fig. 14), and this side surface bulges largely to have a larger radius of curvature than the surface of the raised portion 681 of the region where the wire 303 runs. As the radius of curvature of the outer edge of the arcuated portion 682-1 is larger than that of the surface of the raised portion 681 in this manner, the wire 303 will not catch on the arcuated portion 682-1. Even if the wire 303 of the discharge electrode 300 is to almost catch on the arcuated portion 682-1 during the assembling operation, as the arcuated portion 682-1 is formed only of the rounded surfaces and has no flat portion, the wire 303 will not stay on the arcuated portion 682-1. As the wire 303 will slide down, it will not be bent or will not stay at an undesired position.

(3) Furthermore, the exit portion (linear portion 682-2) of the cap portion 682 is cut straight. Thus, the wire 303 can be mounted smoothly without catching on the exit portion.

More specifically, in the discharge device 1000, as shown in Fig. 14, the end portion of the linear portion 682-2 to the inner side of the device almost coincides with the flat portion (linear portion) of the raised portion 681, and the flange portion does not exist at the end portion of the linear portion 682-2. As shown in Fig. 13, an end portion of this portion, namely, an end-portion end face 682-2-1 (Fig. 13) of the end portion of the linear portion 682-2 to the inner side of the device connects continuously to a side surface 685-1 (Fig. 13) of the upright wall 685 to the inner side of the device. In brief, the end-portion end face 682-2-1 and the side surface 685-1 form one plane. The end portion of the linear portion 682-2 to the inner side of the device almost coincides with the flat portion (linear portion) of the raised portion 681, and no flange portion exists in this end portion. Thus, when directing the discharge electrode 300 (wire 303) in the horizontal direction at the end portion, there is no need to maneuver the discharge electrode 300 to avoid the flange portion (flange shape), and the discharge electrode 300 will not catch on the flange portion. The assembling performance improves accordingly.

(Linking of Intermediate Frame)

In the above embodiment, the right intermediate frame 500 and the left intermediate frame 600 are separate components. Alternatively, an arm that connects the right intermediate frame 500 and the left intermediate frame 600 may be provided, and the right intermediate frame 500 and the left intermediate frame 600 may be formed integrally. More specifically, arms to connect the right and left intermediate frames are integrally formed on the right and left intermediate frames to be parallel to the long-side direction of the device. The discharge electrode 300 is disposed in the intermediate frame integrated, and the intermediate frame in which the discharge electrode 300 is disposed is built in the upper portion of the counter electrode 700. If the discharge electrode 300 is to be built into the device by maneuvering in the presence of the counter electrode 700, the assembling operation is not easy because the counter electrode 700 hinders. With the above structure, however, in the presence of only the intermediate frame, the discharge electrode 300 (wire 303) can be maneuvered and set in the intermediate frame. As the discharge electrode 300 integrated with the intermediate frame is built into the device, the assembling performance improves.

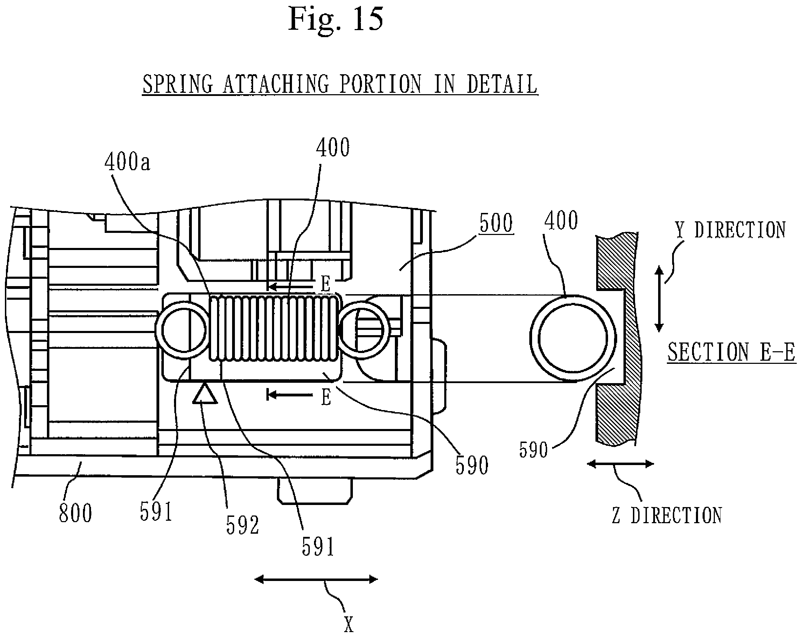

Fig. 15 shows how the spring 400 is attached to the terminal 301 of the discharge electrode 300. As shown in a section E - E, the right intermediate frame 500 to come under the spring 400 has a recessed portion 590. As the recessed portion 590 is formed by processing low the right intermediate frame 500 under the spring 400, the spring 400 (coil spring) having a larger height (Z-direction size) and a larger width (Y-direction size) than those of the discharge electrode 300 can be embedded in the portion that is low in the height direction (Z direction). Consequently, the discharge electrode 300 can be disposed low. Since this keeps the spring 400 away from contact with the intermediate frame, the discharge electrode 300 will not be displaced in the height direction, and stable electric discharge can be obtained. Since the spring 400 is fitted low, the overall thickness of the apparatus in the height direction (Z direction) decreases, the discharge device 1000 becomes compact. If there is no intermediate frame and only the lower frame 800 is provided, the recessed portion 590 may be formed under the spring 400 by processing low the lower frame 800. As shown in Fig. 15, an index line 591 is formed in the recessed portion 590. The index line 591 can be another recessed portion formed further lower than the recessed portion 590, or one or two lines. In place of the index line 591 formed in the recessed portion 590, an index mark 592 may be formed in the frame portion in the vicinity of the spring 400. The index line 591 serves as an index that indicates the appropriate position of the end portion pf the spring 400. The spring 400 is fitted such that its end portion is located in the recessed portion 590 or between two lines. Alternatively, referring to the index line 591, the spring 400 is fitted such that its one end portion extends beyond the index line 591. The tension of the discharge electrode 300 can be adjusted easily by moving the spring 400 to the right and left (X direction in Fig. 15) using the index line 591. Another spring 400 is attached to another portion (Fig. 6). Another spring 400 is fitted in the same manner.

(Counter Electrode 700)

As described earlier, the flat-plate portions 731 are inclined at the inclination angle θ with respect to the lower frame 800. For example, incisions are formed in the lower surface of the intermediate frame or upper frame 200 to have the same angle as the inclination angle θ of the flat-plate portions 731. The end portions of the flat-plate portions 731 are urged from above in the height direction so that the end portions of the flat-plate portions 731 are inserted in the incisions. Hence, even if the inclination angle θ of the flat-plate portions 731 changes from a desired direction due to a molding error or because something comes into contact with the flat-plate portions 731 during the assembly, the flat-plate portions 731 can be corrected to a desired angle. Also, the incisions have an effect of preventing drooping of the flat-plate portions 731 over time. As a result, the polar distance between the discharge electrode 300 and the flat-plate portions 731 does not change, and accordingly desired electric discharge (a discharge current) and an electric field are formed stably. When the flat-plate portions 731 are formed perpendicularly to the lower frame 800, incisions are formed in the lower surface of the upper frame perpendicularly, and the flat-plate portions 731 are inserted into incisions of the upper frame.

At this time, when the end portions of the flat-plate portion 731 are to be urged with the intermediate frame, the end portions of the flat-plate portion 731 are formed to be lower than non-end portions of the flat-plate portions 731. Then, the end portions can be supported by the intermediate frame, at a position lower than the flat-plate portions 731. As the non-incision portion of the intermediate frame is located at almost the same height as the flat-plate portion 731, the intermediate frame will not project excessively upward beyond the flat-plate portion 731, so that the entire thickness of the discharge device 1000 can be reduced.

(Anti-Vibration for Discharge Electrode 300)

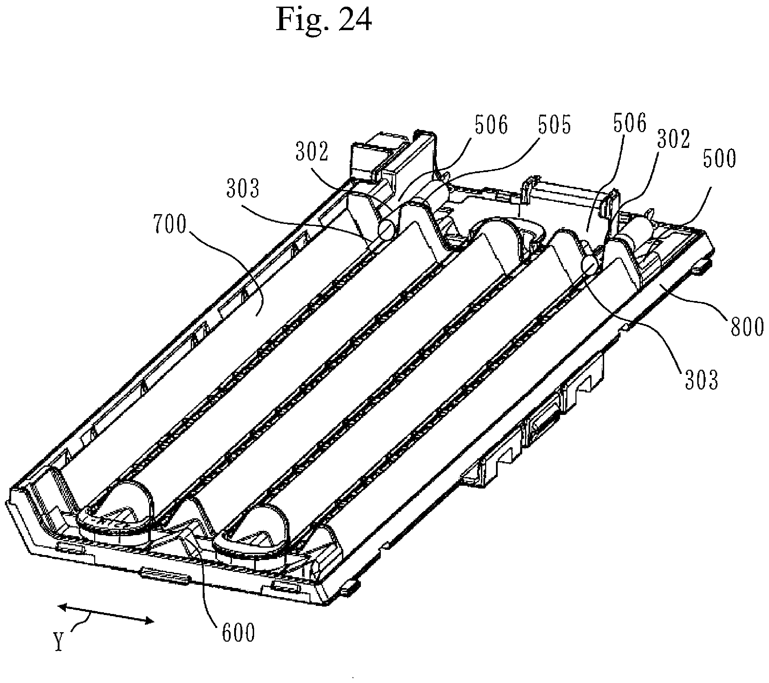

A structure of anti-vibration for the discharge electrode 300 will be described with reference to Fig. 24. Fig. 24 shows a state wherein the right intermediate frame 500, left intermediate frame 600, counter electrode 700, lower frame 800, and discharge electrode 300 are assembled together. As a high voltage is applied to the discharge electrode 300 to cause electric discharge, the discharge electrode 300 may cause microvibration depending on the discharge state, the frequency, or how the high voltage is applied. Also, the vibration of the compressor or in-door unit of the air conditioner may be conducted to the discharge electrode 300, so that the discharge electrode 300 may cause microvibration. Such microvibration may cause resonance of the discharge electrode 300, producing an abnormal sound. Also, the microvibration itself may produce an abnormal sound. To prevent this, the tube 302 to improve the bending strength of the discharge electrode 300 is set above the notch 506 where the discharge electrode 300 is to extend. Furthermore, the lateral width (width in the Y direction) of each notch 506 through which the discharge electrode 300 located at the same height as the tube 302 extends is decreased to be smaller than the thickness (outer diameter) of the tube 302. If the tube 302 is heat-shrinkable, the outer diameter of the tube 302 after heat shrinkage should be larger than the lateral width of the notch 506 through which the discharge electrode 300 located at the same height as the tube 302. Namely, the tube 302 will be pinched by the widthwise portion of the notch 506. As the outer surface of the tube 302 is pinched by the notch 506, the tube 302 is partly in contact with the notch 506 through which the discharge electrode 300 extends. When the tube 302 is partly in contact with the notch 506 through which the discharge electrode 300 extends, microvibration of the discharge electrode 300 can be suppressed. When the microvibration of the discharge electrode 300 is suppressed, abnormal sound will not be produced definitely. When the vibration of the discharge electrode 300 is prevented, a constant distance is kept between the discharge electrode 300 and the counter electrode 700, so that the electric discharge space and the electric field space can be formed stably. It may be difficult to bring the wire 303 of the discharge electrode 300 into contact with the notch 506 because the wire 303 is very thin. Instead, by bringing the tube 302 into contact with the notch 506, vibration of the discharge electrode 300 is prevented reliably. For this purpose, as indicated in Figs. 24, 6, and the like, the tube 302 is positioned above the lower end of the notch 506 through which the discharge electrode 300 extends, and the tube 302 is guided to the air duct (closer to the insulation wall 605 than the insulation wall 605-side surface of the insulation wall 505).

(Anti-Vibration for Counter Electrode 700)

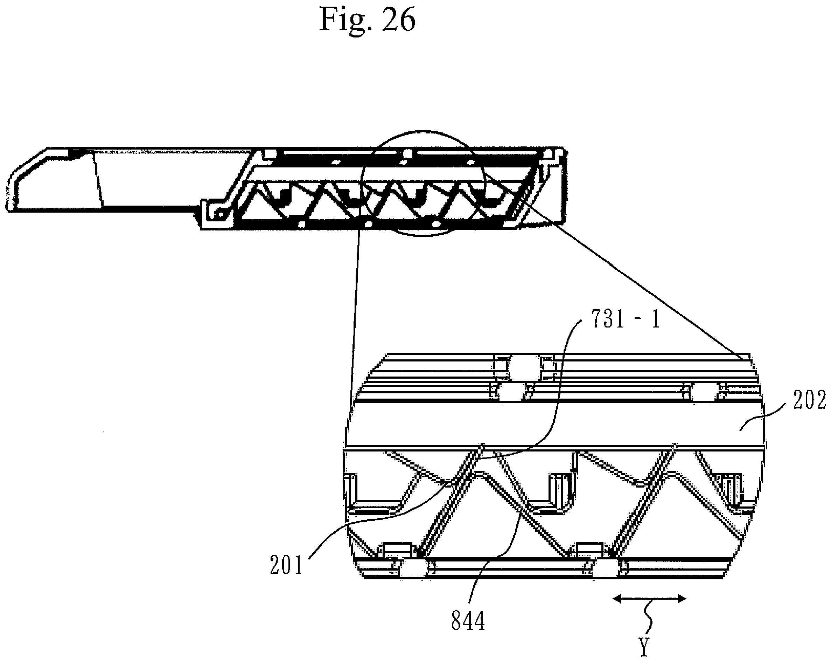

A structure of anti-vibration for the counter electrode 700 will be described with reference to Figs. 25 and 26. Fig. 25 is a perspective view showing a structure on the lower side of the upper frame 200. Fig. 26 shows the sectional structure of the discharge device 1000. The counter electrode 700 is made of a metal. Since an object has a characteristic vibration of its own, when the frequency of the compressor of an air conditioner changes continuously, a certain frequency of the compressor may cause the counter electrode 700 to vibrate. Other than the compressor of the air conditioner, the vibration of the indoor unit or the like may also cause the counter electrode 700 to vibrate. When the counter electrode 700 vibrates, its metal may produce a strange noise called a beat noise or resonance. The strange noise is unpleasant to the user. To prevent this, as shown in Fig. 25, counter electrode contact ribs 202 are formed on the lower sides of some vertical bars 205 of the upper frame 200 and are brought into contact with counter electrode highest portions 731-1 (upper ends of the flat-plate portions 731) (Fig. 26). The counter electrode highest portions 731-1 are those portions of the counter electrode 700 which are the closest to the upper frame 200, and correspond to the end portion of the counter electrode 700, namely, the upper ends of the flat-plate portions 731. As shown in Fig. 26, the counter electrode contact ribs 202 are in contact with the counter electrode highest portions 731-1 by being urged against the counter electrode highest portions 731-1 from above such that the counter electrode contact ribs 202 slightly bite into the counter electrode highest portions 731-1. This causes a reaction. More specifically, as the counter electrode contact ribs 202 and the counter electrode highest portions 731-1 slightly bite each other, they overlap in the assembly size, and the counter electrode 700 elastically deforms slightly to cause the reaction (elastic force). When the counter electrode contact ribs 202 are urged against the counter electrode highest portions 731-1 to come into contact with them, the counter electrode 700 is fixed. This can suppress the microvibtaion of the counter electrode 700 made of a metal. When the vibration of the counter electrode 700 is suppressed, a strange noise will be prevented reliably. When the vibration of the counter electrode 700 is suppressed, a constant distance is maintained between the discharge electrode 300 and the counter electrode 700, so that a discharge space and an electric field space can be formed stably. As shown in Fig. 25, the counter electrode contact ribs 202 extend vertically (in the Y direction) from top to bottom in the short-side direction of the opening of the upper frame 200 across a plurality of horizontal bars 206. Since the counter electrode contact ribs 202 extend vertically from top to bottom in the short-side direction of the opening of the upper frame 200, they can be in contact with all of the plurality of rows of the counter electrodes 700. The plurality of counter electrode contact ribs 202 are provided across the long-side direction of the opening of the upper frame 200 (Fig. 25 shows an example of four counter electrode contact ribs 202). Although one counter electrode contact rib 202 may suffice, if a plurality of counter electrode contact ribs 202 are provided, they come into contact with the counter electrode highest portions 731-1 at a larger number of contact points, so that the vibration can be suppressed reliably. The counter electrode contact ribs 202 are parallel to the vertical bars 205 of the upper frame 200, and the counter electrode 700 is parallel to the horizontal bars 206 of the upper frame 200. Thus, the counter electrode contact ribs 202 and the counter electrode highest portions 731-1 are angularly displaced from each other by 90° and cross with each other. As the counter electrode contact ribs 202 are formed on the lower surfaces of the vertical bars 205 of the upper frame 200, they are parallel to the air flow of the air conditioner. This prevents pressure loss and does not impair the performance of the air conditioner. As the counter electrode contact ribs 202 are formed on the lower surfaces of the vertical bars 205, they will not cause a direct pressure loss.

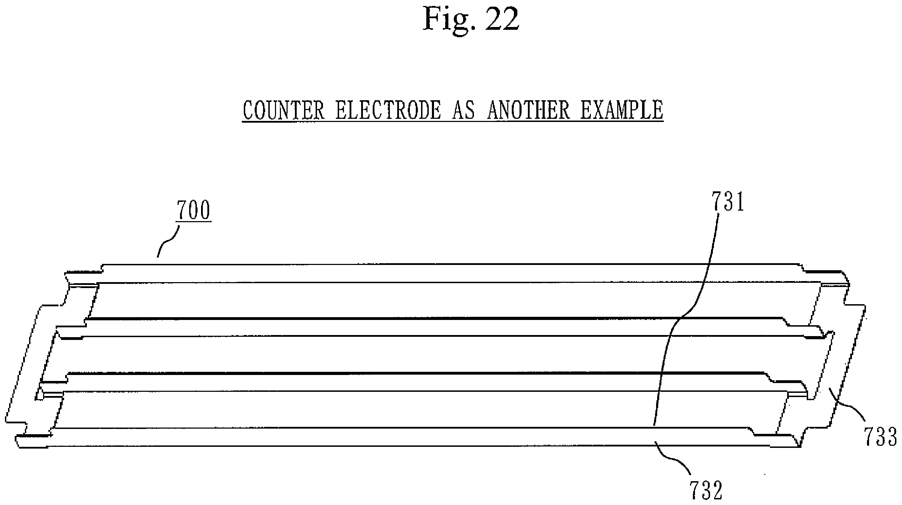

In the above embodiment, the connecting portions 733 are bent, as shown in Fig. 8 and in (b) of Fig. 12. Alternatively, a structure in which the connecting portions 733 are not bent is also possible, as shown in Fig. 22. Fig. 22 shows another example of the counter electrode.

[Industrial Applicability]

As application examples of the present invention, the present invention can be used by building it in a product such as a room air conditioner, a package air conditioner, a cleaner, a hand dryer, an air cleaner, a humidifier, a dehumidifier, a ventilation fan, an elevator, a refrigerator, an automobile, and an electric train. When the present invention is mounted in these products, the bacteria, fungus, viruses, and the like suspended in a room and passing through the discharge device 1000 are removed and inactivated efficiently by the formed electric discharge and electric field. Thus, the air is cleaned and the amenity of the user improves.

Numerous additional modifications and variations are possible in light of the above teachings. It is therefore to be understood that, within the scope of the appended claims, the disclosure of this patent specification may be practiced otherwise than as specifically described herein.

**[Reference Signs List]**

100: prefilter; 200: upper frame; 201: upper rib; 202: counter electrode contact rib; 205: vertical bar; 206: horizontal bar; 207, 208: side surface portion; 211: handle portion; 300: discharge electrode; 301: terminal; 302: tube; 303: wire; 400: spring; 400a: spring end portion; 500: right intermediate frame; 505: insulation wall; 506: notch; 507: extending portion; 508: flat portion; 590: recessed portion; 591: index line; 592: index mark; 600: left intermediate frame; 605: insulation wall; 606: notch; 607: extending portion; 608: flat portion; 680: fold-back portion; 681: raised portion; 682: cap portion; 682-1: arcuated portion; 682-2: linear portion; 683: region; 685: upright wall; 700: counter electrode; 707: first connecting piece; 708: second connecting piece; 709: high-voltage-side supply terminal; 709a: catch portion; 710: low-voltage-side connecting portion; 731: flat-plate portion; 731-1: counter electrode highest portion; 732: belt portion; 733: connecting portion; 733R: first connecting portion; 733L: second connecting portion; 735: first projecting portion; 736: second projecting portion; 741: bend portion; 742: line-up direction; 800: lower frame; 840: low-voltage terminal holding portion; 841: high-voltage terminal holding portion; 842a, 842b: drain hole; 843: counter electrode holding portion; 844: lower rib; 846, 847: lower-frame protruding portion; 851-854: claw; 931: flat-plate portion; 932: belt portion; 933: connecting portion; 1000: discharge device; 1500: support portion; 1512: grid portion; 1530: high-voltage substrate; 1514: catch portion; 1518: panel contact portion; 1519: opening portion; 1520: upper rib; 1521: lower rib; 1522: screwed portion; 1540: high-voltage substrate cover; 1560: support-side low-voltage terminal; 1570: support-side high-voltage terminal; 2000: support portion assembly; 3000: air conditioner; 3060: heat exchanger; 3061: suction port; 3062: blowout port; 3063: blower fan; 3064: air conditioner prefilter; 3070: panel

**Claims**

1. A discharge device (1000) comprising:

   a low-potential counter electrode (700) constituted by at least three flat-plate portions (731), a first connecting portion (733R), and a second connecting portion (733L) which are integrally formed of one conductive plate body, the at least three flat-plate portions having elongated shapes and forming flat plates disposed almost parallel to each other, the first connecting portion serving to connect one-end portions of the elongated shapes of the at least three flat-plate portions, the second connecting portion serving to connect the other-end portions of the elongated shapes of the at least three flat-plate portions;
   a high-voltage-side discharge electrode (300) which forms a wire, is arranged to extend among adjacent ones of the flat-plate portions in a lengthwise direction of the elongated shapes;
   a lower frame (800) located below the counter electrode and the discharge electrode, made of an insulating material, and serving to support the counter electrode;
   a first upper frame (500) made of an insulating material and serving to cover the first connecting portion of the counter electrode from above; and
   a second upper frame (600) made of an insulating material and serving to cover the second connecting portion of the counter electrode from above,

**characterized in that**
the high-voltage-side discharge electrode (300) has a potential higher than the potential of the counter electrode,
wherein each of the first upper frame and the second upper frame has an insulating wall (505, 605) which is made of an insulating material, stands upward along the end portions of the at least three flat-plate portions, and has notches (506, 606) through which the discharge electrode extends, and
wherein each of the first upper frame and the second upper frame has an extending portion (507, 607) which extends from a base of the insulating wall toward the lower frame, and together with the lower frame, isolates the first connecting portion and the second connecting portion from the discharge electrode.

2. The discharge device according to claim 1, wherein the lower frame is provided with a high-voltage power supply portion (709) that supplies power to the discharge electrode, and wherein either one of the first upper frame and the second upper frame covers the high-voltage power supply portion at least partly.

3. The discharge device according to claim 1 or 2, wherein each one of the first upper frame and the second upper frame has a flat end portion (508, 608) away from the insulating wall and in a lengthwise direction of the flat-plate portion.

4. The discharge device according to any one of claims 1 to 3, wherein each of the first upper frame and the second upper frame has a fold-back portion (680) where the discharge electrode is folded back.

5. The discharge device according to claim 4, wherein the folded-back portion has
a raised portion (681) which stands upward and has an almost U-letter-shaped horizontal section that forms a convex extending from the end portion of the flat-plate portion in the lengthwise direction, and a flange portion (682) formed above the raised portion and having an arcuated distal end.

6. An air conditioner in which a discharge device according to any one of claims 1 to 5 is disposed upstream of a heat exchanger, between a suction port and the heat exchanger.

**Patentansprüche**

1. Entladungsvorrichtung (1000), umfassend:

eine Niederpotential-Gegenelektrode (700), die aus zumindest drei Flachplattenabschnitten (731), einem ersten Verbindungsabschnitt (733R) und einem zweiten Verbindungsabschnitt (733L) gebildet ist, die aus einem leitenden Plattenkörper integral ausgebildet sind, wobei die zumindest drei Flachplattenabschnitte längliche Formen aufweisen und fast parallel zueinander angeordnete Flachplatten bilden, wobei der erste Verbindungsabschnitt dazu dient, die Abschnitte der einen Enden der länglichen Formen der zumindest drei Flachplattenabschnitte zu verbinden, der zweite Verbindungsabschnitt dazu dient, die Abschnitte der anderen Enden der länglichen Formen der zumindest drei Flachplattenabschnitte zu verbinden;
eine hochspannungsseitige Entladungselektrode (300), die einen Draht bildet, angeordnet ist, um sich zwischen benachbarten der Flachplattenabschnitte in einer Längsrichtung der länglichen Formen zu erstrecken;
einen unteren Rahmen (800), der unterhalb der Gegenelektrode und der Entladungselektrode angeordnet ist, der aus einem Isoliermaterial gebildet ist und dazu dient, die Gegenelektrode zu stützen;
einen ersten oberen Rahmen (500), der aus einem Isoliermaterial gebildet ist und der dazu dient, den ersten Verbindungsabschnitt der Gegenelektrode von oben zu bedecken; und
einen zweiten oberen Rahmen (600), der aus einem Isoliermaterial gebildet ist und der dazu dient, den zweiten Verbindungsabschnitt der Gegenelektrode von oben zu bedecken;

**dadurch gekennzeichnet, dass** die hochspannungsseitige Entladungselektrode (300) ein Potential aufweist, das höher ist als das Potential der Gegenelektrode,
wobei jeder von dem ersten oberen Rahmen und dem zweiten oberen Rahmen eine Isolierwand (505, 605) aufweist, die aus einem Isoliermaterial gebildet ist, entlang der Endabschnitte der zumindest drei Flachplattenabschnitte nach oben steht und Kerben (506, 606) aufweist, durch die sich die Entladungselektrode erstreckt, und
wobei jeder von dem ersten oberen Rahmen und dem zweiten oberen Rahmen einen Verlängerungsabschnitt (507, 607) aufweist, der sich von einer Basis der Isolierwand in Richtung des unteren Rahmens erstreckt, und zusammen mit dem unteren Rahmen den ersten Verbindungsabschnitt und den zweiten Verbindungsabschnitt von der Entladungselektrode isoliert.

2. Entladungsvorrichtung nach Anspruch 1,
wobei der untere Rahmen mit einem Hochspannungsenergieversorgungsabschnitt (709) versehen ist, der die Entladungselektrode mit Energie versorgt, und
wobei einer von dem ersten oberen Rahmen und dem zweiten oberen Rahmen den Hochspannungsenergieversorgungsabschnitt zumindest teilweise bedeckt.

3. Entladungsvorrichtung nach Anspruch 1 oder 2,
wobei jeder von dem ersten oberen Rahmen und dem zweiten oberen Rahmen einen flachen Endabschnitt (508, 608) entfernt von der Isolierwand und in einer Längsrichtung des Flachplattenabschnitts aufweist.

4. Entladungsvorrichtung nach einem der Ansprüche 1 bis 3, wobei
jeder von dem ersten oberen Rahmen und dem zweiten oberen Rahmen einen Umschlageabschnitt (680) aufweist, wo die Entladungselektrode umgeschlagen ist.

5. Entladungsvorrichtung nach Anspruch 4, wobei der umgeschlagene Abschnitt
einen erhöhten Abschnitt (681) aufweist, der nach oben steht und einen fast U-buchstabenförmigen horizontalen Abschnitt aufweist, der einen konvexen Abschnitt bildet, der sich vom Endabschnitt des Flachplattenabschnitts in der Längsrichtung erstreckt, und
einen Flanschabschnitt (682) aufweist, der über dem erhöhten Abschnitt ausgebildet ist und ein gebogenes distales Ende aufweist.

6. Klimaanlage, in der eine Entladungsvorrichtung nach einem der Ansprüche 1 bis 5 stromaufwärts eines Wärmetauschers zwischen einer Ansaugöffnung und dem Wärmetauscher angeordnet ist.

## Revendications

1. Dispositif de décharge (1000) comprenant :

    une contre-électrode à faible potentiel (700) constituée par trois parties de plaques plates (731) au moins, une première partie de connexion (733R), et une seconde partie de connexion (733L) qui est formée d'une pièce avec un corps de plaque conducteur, les trois parties de plaques plates au moins présentant des formes allongées, et formant des plaques plates disposées presque parallèles les unes aux autres, la première partie de connexion servant à connecter les parties d'une extrémité des formes allongées aux trois parties de plaques plates au moins, la seconde partie de connexion servant à connecter les parties de l'autre extrémité des formes allongées des trois parties de plaques plates au moins ;
    une électrode de décharge du côté d'haute tension (300) qui forme un fil, est agencée pour s'étendre parmi celles adjacentes des parties de plaques plates dans la direction de la longueur des formes allongées ;
    un bâti inférieur (800) situé sous la contre-électrode et l'électrode de décharge, réalisé dans un matériau isolant, et servant à supporter la contre-électrode ;
    un premier bâti supérieur (500) réalisé dans un matériau isolant et servant à couvrir la première partie de connexion de la contre-électrode à partir du dessus ; et
    un second bâti supérieur (600) réalisé dans un matériau isolant et servant à couvrir la seconde partie de connexion de la contre-électrode à partir du dessus,

    **caractérisé en ce que**
    l'électrode de décharge du côté d'haute tension (300) présente un potentiel plus élevé que le potentiel de la contre-électrode,
    où chacun du premier bâti supérieur et du second bâti supérieur présente une paroi isolante (505, 605) qui est réalisée dans un matériau isolant, s'élève vers le haut le long des parties extrémités des trois parties de plaques plates au moins, et présente des encoches (506, 606) à travers lesquelles s'étend l'électrode de décharge, et
    où chacun du premier bâti supérieur et du second bâti supérieur présente une partie d'extension (507, 607) qui s'étend à partir d'une base de la paroi isolante vers le bâti inférieur, et qui, avec le bâti inférieur, isole de l'électrode de décharge, la première partie de connexion et la seconde partie de connexion.

2. Dispositif de décharge selon la revendication 1, où le bâti inférieur est doté d'une partie d'alimentation à haute tension (709) qui fournit l'alimentation à l'électrode de décharge, et
où l'un ou l'autre du premier bâti supérieur et du second bâti supérieur couvre en partie au moins la partie d'alimentation à haute tension.

3. Dispositif de décharge selon la revendication 1 ou 2, où chacun du premier bâti supérieur et du second bâti supérieur présente une partie d'extrémité plate (508, 608) à partir de la paroi isolante et dans la direction de la longueur de la partie de plaque plate.

4. Dispositif de décharge selon l'une quelconque des revendications 1 à 3, où
chacun du premier bâti supérieur et du second bâti supérieur présente une partie rabattable (680) où l'électrode de décharge est rabattue.

5. Dispositif de décharge selon la revendication 4, où la partie rabattable présente
une partie relevée (681) qui s'élève vers le haut, et présente une section horizontale presque en forme de U qui forme une partie convexe qui s'étend à partir de la partie d'extrémité de la partie de plaque plate dans la direction de la longueur, et
une partie de bride (682) formée au-dessus de la partie relevée et présentant une extrémité distale arquée.

6. Climatiseur dans lequel est disposé un dispositif de décharge selon l'une quelconque des revendications 1 à 5, en amont d'un échangeur de chaleur, entre un orifice d'aspiration et l'échangeur de chaleur.

Fig. 1

Fig. 2

EP 2 700 452 B1

## Fig. 3

EP 2 700 452 B1

Fig. 4

Fig. 5

Fig. 6

EP 2 700 452 B1

# Fig. 7

EP 2 700 452 B1

Fig. 8

# Fig. 9

(a)

701 : WIND DIRECTION

731

732

B-B SECTIONAL VIEW (CENTRAL PORTION)

731

(b)

SECTIONAL VIEW SEEN FROM C DIRECTION (CONNECTING PORTION)

# Fig. 10

EP 2 700 452 B1

931

932

933

D

D

C DIRECTION

## Fig. 11

(a) D-D SECTIONAL VIEW
(CENTRAL PORTION)

901 : WIND DIRECTION

931

932

(b) SIDE VIEW SEEN FROM DIRECTION C
(CONNECTING PORTION)

931

# Fig. 12

(a)

735　　　735　　　303

707

733R

(b)

735　751　735　303

707

741

733R

X

Z

COUNTER ELECTRODE 700　(CORRESPONDING TO C-C SECTION OF FIG. 8)

EP 2 700 452 B1

# Fig. 13

(a)                    (b)

EP 2 700 452 B1

Fig. 14

# Fig. 15

SPRING ATTACHING PORTION IN DETAIL

SECTION E-E

Y DIRECTION

Z DIRECTION

X

EP 2 700 452 B1

# Fig. 16

EP 2 700 452 B1

Fig. 17

Fig. 18

300 (303)

505

506

507

846

700 (733)

508

Fig. 19

EP 2 700 452 B1

# Fig. 20

(a)

(b)

E−E SECTIONAL VIEW

709  847    547    710

EP 2 700 452 B1

# Fig. 21

## Fig. 22

COUNTER ELECTRODE AS ANOTHER EXAMPLE

EP 2 700 452 B1

Fig. 23

## Fig. 24

Fig. 25

Fig. 26

731 - 1

202

201

844

Y

EP 2 700 452 B1

**EP 2 700 452 B1**

**REFERENCES CITED IN THE DESCRIPTION**

**Patent documents cited in the description**

- JP 2012183292 A
- WO 2013054428 A1
- EP 2701252 A1

- JP 2008284412 A
- US 20070028775 A1
- JP 2048047 A